# EUROPÄISCHE PATENTSCHRIFT

(11) **EP 1 086 999 B1**
(45) Veröffentlichungstag und Bekanntmachung des Hinweises auf die Patenterteilung: **06.11.2002**
(21) Anmeldenummer: 00810849.0
(22) Anmeldetag: 19.09.2000
(51) Int. Cl.: C09D 11/00

(54) **Magentafärbende Tinten enthaltend Kupferkomplexazofarbstoffe auf der Bais von 1-Naphthol-di-oder trisulfonsäuren**
Magenta-colouring inks containing copper complexes of azo dyes on the basis of 1-naphthol-di or trisulfonic acids
Des encres magenta contenant des complexes de cuivre de colorants azoiques à base d' acides 1-naphthol-di- ou trisulfoniques

(30) Priorität: 27.09.1999 CH 176199; 10.01.2000 CH 41002000
(43) Veröffentlichungstag der Anmeldung: 28.03.2001
(73) Patentinhaber: Ciba Specialty Chemicals Holding Inc., 4057 Basel (CH)
(72) Erfinder: Lehmann, Urs, 4057 Basel (CH); Frick, Marcel, 4153 Reinach (CH)

(56) Entgegenhaltungen:
- EP-A- 0 277 624
- EP-A- 0 312 004
- PATENT ABSTRACTS OF JAPAN vol. 014, no. 544 (C-0784), 4. Dezember 1990 (1990-12-04) & JP 02 232274 A (CANON INC), 14. September 1990 (1990-09-14)

## Beschreibung

Die vorliegende Erfindung betrifft Tinten, enthaltend bestimmte Kupferkomplexazofarbstoffe auf der Basis von 1-Naphthol-3,6,8-trisulfonsäure oder 1-Naphthol-3,8-disulfonsäure als Kupplungskomponente sowie Farbstoffmischungen enthaltend die besagten Farbstoffe. Einen weiteren Gegenstand der vorliegenden Erfindung bilden die neuen Kupferkomplexazofarbstoffe, die in den erfindungsgemässen Tinten bzw. Farbstoffmischungen enthalten sind.

Die der vorliegenden Erfindung zugrundeliegenden Tinten eignen sich insbesondere zum Bedrucken von Papier, textilen Fasermaterialien, Kunststoff- oder Aluminium-Folien, vorzugsweise nach dem Tintenstrahldruckverfahren, und ergeben Magenta-Färbungen und Drucke mit guter Lichtechtheit und hoher Farbbrillanz.

Die der vorliegenden Erfindung zugrundeliegenden Farbstoffe und Farbstoffmischungen eignen sich zur Herstellung der erfindungsgemässen Tinten, sowie zum Färben von Papier, Holz, textilen Fasermaterialien, Aluminium-Blechen oder Folien nach traditionellen Färbeund Druckverfahren und ergeben Magenta-Färbungen und Drucke mit guter Lichtechtheit und hoher Farbbrillanz.

An Tinten werden hohe Anforderungen hinsichtlich der Lichtechtheit und der Farbbrillanz gestellt. Die bekannten magentafärbenden Tinten erfüllen diese Anforderungen nicht gleichzeitig. So ergeben die bekannten Tinten zwar Aufzeichnungen mit einer guten Lichtechtheit. Die Farbtöne sind in diesen Fällen allerdings stumpf und die Brillanz ist gering, wie z.B. im Fall von Tinten, die C.l. Reactive Red 23 enthalten. Andere bekannte Tinten ergeben hingegen Aufzeichnungen mit einer hohen Brillanz. Jedoch erreicht man mit diesen Tinten nicht die geforderte Qualität im Hinblick auf die Lichtechtheit der Aufzeichnungen.

Der vorliegenden Erfindung liegt daher die Aufgabe zugrunde, verbesserte Tinten für das Färben und Bedrucken von Papier, textilen Fasermaterialien, Kunststoff- oder Aluminium-Folien bereitzustellen, welche die oben charakterisierten Qualitäten in hohem Masse besitzen. Die neuen Tinten sollten brillante Farbtöne ergeben und sich gleichzeitig durch eine gute Lichtechtheit auszeichnen.

Es wurde nun überraschend gefunden, dass Tinten, die einen Kupferkomplex enthalten, der C.I. Reactive Red 23 strukturell ähnlich ist, ein brillantes und blaustichiges Magenta mit guter Lichtechtheit ergeben.

Gegenstand der vorliegenden Erfindung sind somit
Tinten, enthaltend einen Farbstoff der Formel (1) 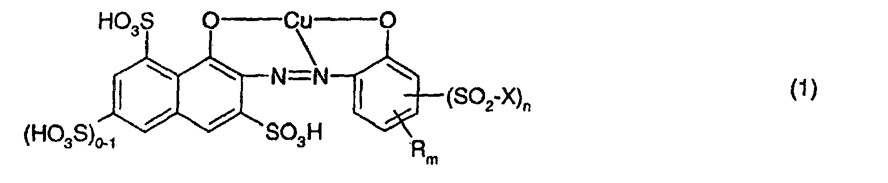 worin
X Hydroxy; gegebenenfalls durch Hydroxy substituiertes C₁-C₄-Alkyl; Vinyl oder einen Rest -CH₂-CH₂-Z bedeutet, wobei Z eine alkalisch abspaltbare Gruppe oder gegebenenfalls im Alkylteil substituiertes und/oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes und/oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstituiertes C₁-C₄-Alkyl bedeutet, C₁₀-C₂₀-Terpenamino, gegebenenfalls im Cycloalkylring substituiertes C₅-C₇-Cycloalkyl-amino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl ist; oder X die Bedeutung von Z mit Ausnahme einer alkalisch abspaltbaren Gruppe hat;
R C₁-C₄-Alkyl, C₁-C₄-Alkoxy oder Halogen bedeutet; und
m und n unabhängig voneinander die Zahl 0, oder 2 sind; und
ein organisches Lösungsmittel.

Z als C₁-C₂₄-Alkoxy, vorzugsweise C₁-C₁₂-Alkoxy und insbesondere C₁-C₄-Alkoxy ist geradkettig oder verzweigt und bedeutet beispielsweise Methoxy, Ethoxy, Propoxy, Isopropoxy, n-Butoxy, sek.-Butoxy, Isobutoxy oder tert.-Butoxy. Die genannten Reste sind unsubstituiert oder im Alkylteil substituiert, z.B. durch C₁-C₄-Alkoxy, wie beispielsweise Methoxy oder Ethoxy; Hydroxy; Sulfo; Sulfato oder Carboxy. Im Alkylteil durch Sauerstoff unterbrochene und gegebenenfalls weitersubstituierte Reste sind beispielsweise Polyalkylenoxide mit 4 bis 24 Kohlenstoffatomen, wie z.B. Polyethylenoxid der Formel -(O-(O-CH₂-CH₂)₂₋₁₂-OH, Polypropylenoxyd der Formel 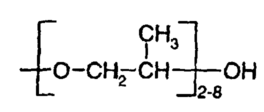 und gemischtes Polyethylenoxid/Polypropylenoxid. Die Hydroxygruppe der genannten Polyalkylenoxidreste kann beispielsweise durch C₁-C₄-Alkyl, wie z.B. Methyl oder Ethyl, verethert sein.

Z als C₁-C₄-Alkylthio bedeutet beispielsweise Methylthio, Ethylthio, Propylthio, Isopropylthio oder n-Butylthio. Die genannten Reste sind unsubstituiert oder im Alkylteil substituiert, z.B. durch C₁-C₄-Alkoxy, wie beispielsweise Methoxy oder Ethoxy; Hydroxy; Sulfo oder Carboxy. Bevorzugt sind die durch einen oder zwei Reste aus der Gruppe Hydroxy, Sulfo oder Carboxy substituierten Reste.

Z als Phenyloxy oder Phenylthio kann sowohl die unsubstituierten wie auch die im Phenylring z.B. durch C₁-C₄-Alkyl, wie beispielsweise Methyl oder Ethyl, welches gegebenenfalls z.B. durch Carboxy weitersubstituiert ist; C₁-C₄-Alkoxy, wie beispielsweise Methoxy oder Ethoxy; Carboxy; C₂-C₄-Alkanoylamino, wie beispielsweise Acetylamino oder Propionylamino; Carbamoyl; N-C₁-C₄-Alkylcarbamoyl, welches gegebenenfalls im Alkylteil z.B. durch Carboxy weitersubstituiert ist, wie beispielsweise N-Carboxymethylcarbamoyl; Sulfamoyl; N-C₁-C₄-Alkylsulfamoyl; Sulfo oder Halogen, wie beispielsweise Chlor oder Brom; substituierten Reste umfassen. Bevorzugt sind die substituierten Reste, vorzugsweise die durch Carboxy, Carboxymethyl, N-Carboxymethylcarbamoyl oder Sulfo, insbesondere Carboxy oder Sulfo, substituierten Reste.

Z als N-Mono- oder N,N-Di-C₁-C₂₄-Alkylamino bedeutet beispielsweise Methylamino, Ethylamino, N,N-Di-Methylamino, N,N-Di-Ethylamino, Isopropylamino, n-Butylamino, sek.-Butylamino, Isobutylamino oder tert.-Butylamino, lineares oder verzweigtes Pentylamino, Hexylamino, Heptylamino, Octylamino, Nonylamino, Decylamino, Undecylamino, Dodecylamino, Tridecylamino oder Tetradecylamino. Die genannten Reste sind unsubstituiert oder im Alkylteil substituiert, z.B. durch Phenyl, welches seinerseits durch Carboxy, Carbamoyl, Sulfo oder Sulfamoyl substituiert sein kann; Amino; C₂-C₄-Alkanoylamino, wie beispielsweise Acetylamino oder Propionylamino; C₁-C₄-Alkoxy, wie beispielsweise Methoxy oder Ethoxy; Hydroxy; Sulfo; Sulfato; Carboxy; Carbamoyl oder Sulfamoyl. Die genannten Reste sind gegebenenfalls im Alkylteil durch Sauerstoff oder -NR₁- unterbrochen, wobei R₁ Wasserstoff oder gegebenenfalls z.B. durch Amino oder Hydroxy substituiertes C₁-C₄-Alkyl, z.B. Methyl oder Ethyl, vorzugsweise Wasserstoff, bedeutet.
Als Beispiele für die im Alkylteil substituierten und/oder die durch Sauerstoff oder -NR₁- im Alkylteil unterbrochenen Reste seien
N-β-Aminoethylamino, N-β-Aminopropylamino, N-β-Hydroxyethylamino, N,N-Di-β-Hydroxyethylamino, N-2-(β-Hydroxyethoxy)ethylamino, N-2-{2-(β-Hydroxyethoxy)ethoxy]-ethylamino, N-2-(β-Hydroxyethylamino)ethylamino, N-2-(β-Aminoethylamino)ethylamino, Polyethylenimine der Formel -(NH-CH₂-CH₂)₃-NH₂ oder -(NH-CH₂-CH₂)₄-NH₂, 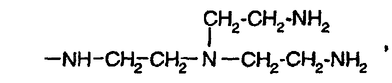 N-β-Sulfatoethylamino, N-β-Sulfoethylamino, N-Carboxymethylamino, N-β-Carboxyethylamino, N-α,β-Dicarboxyethylamino,
N-α,γ-Dicarboxypropylamino, N-Ethyl-N-β-Hydroxyethylamino und N-Methyl-N-β-Hydroxyethylamino genannt.
Geeignete unsubstituierte und ununterbrochene, im Alkylteil verzweigte Reste entsprechen z.B. der Formel 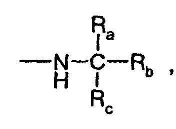 wobei die Summe der Kohlenstoffatome Rₐ + R_{b} + R_{c} 11 bis 14 beträgt. Beispielhaft für die dem Rest der vorbezeichneten Formel zugrundeliegenden Amine sei ®Primene 81 R (Rohm & Haas) genannt.

Z als N-Mono- oder N,N-Di-C₁-C₂₄-Alkylamino, welches im Alkylteil substituiert und/oder durch Sauerstoff oder -NR₁- unterbrochen ist, wobei R₁ die oben angegebene Bedeutung und Bevorzugung hat, ist vorzugsweise N-Mono- oder N,N-Di-C₁-C₆-Alkylamino und insbesondere N-Mono- oder N,N-Di-C₁-C₄-Alkylamino.

Bevorzugt für Z als N-Mono- oder N,N-Di-C₁-C₂₄-Alkylamino sind die im Alkylteil durch Phenyl, Amino, Hydroxy, Sulfo, Sulfato, Carboxy oder Carbamoyl, insbesondere durch Phenyl, Amino, Sulfo, Sulfato, Carboxy oder Carbamoyl, substituierten und gegebenenfalls durch -NH- unterbrochenen Reste.

Z als C₁₀-C₂₀-Terpenamino, vorzugsweise C₂₀-Diterpenamino, ist eine am Stickstoff durch einen Terpenkohlenwasserstoffrest monosubstituierte Aminogruppe. Als Terpenkohlenwasserstoffrest kommen z.B. acyclische-, monocyclische- oder bicyclische C₁₀-Terpene, acyclische-, monocyclische-, bicyclische- oder tricyclische C₁₅-Sesquiterpene, acyclische-, monocyclische- oder tricyclische C₂₀-Diterpene, insbesondere tricyclische C₂₀-Diterpene und ganz besonders dehydrierte tricyclische C₂₀-Diterpene, etwa solche, die sich von der Dehydroabietinsäure ableiten. Beispielhaft für einen solchen dehydrierten tricyclischen C₂₀-Diterpenaminorest, sei der Rest der Formel 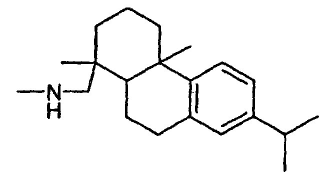 genannt.

Z als C₅-C₇-Cycloalkylamino kann sowohl die unsubstituierten wie auch die im Cycloalkylring z.B. durch C₁-C₄-Alkyl, wie beispielsweise Methyl oder Ethyl, insbesondere Methyl, oder Carboxyl substituierten Reste umfassen. Bevorzugt als solche Reste sind die entsprechenden Cyclohexylreste.

Z als Phenylamino oder N-C₁-C₄-Alkyl-N-phenylamino, vorzugsweise Phenylamino, kann sowohl die unsubstituierten wie auch die im Phenylring z.B. durch C₁-C₄-Alkyl, wie beispielsweise Methyl oder Ethyl, welches gegebenenfalls z.B. durch Carboxy weitersubstituiert ist; C₁-C₄-Alkoxy, wie beispielsweise Methoxy oder Ethoxy; Carboxy; Carbamoyl; N-C₁-C₄-Alkylcarbamoyl, welches gegebenenfalls im Alkylteil z.B. durch Carboxy weitersubstituiert ist, wie beispielsweise N-Carboxymethylcarbamoyl; Sulfo oder Halogen, wie beispielsweise Chlor oder Brom; substituierten Reste umfassen. Bevorzugt sind die substituierten Reste, vorzugsweise die durch Carboxy, Carboxymethyl, N-Carboxymethylcarbamoyl oder Sulfo, insbesondere Sulfo substituierten Reste.

Z als Naphthylamino oder N-C₁-C₄-Alkyl-N-naphthylamino, vorzugsweise Naphthylamino, kann sowohl die unsubstituierten wie auch die im Naphthylring z.B. durch Sulfo substituierten Reste umfassen. Bevorzugt sind die durch 1 bis 3, insbesondere 2 bis 3, Sulfogruppen substituierten Reste.

Z als gegebenenfalls am Stickstoff substituiertes Piperazin-1-yl ist z.B. ein Rest der Formel 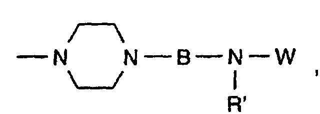 worin
B ein organisches Brückenglied und
R' Wasserstoff oder gegebenenfalls substituiertes C₁-C₄-Alkyl sind,
W Wasserstoff oder ein Rest der Formel -CO-R" ist, wobei R" gegebenenfalls substituiertes C₁-C₈-Alkyl, C₅-C₇-Cycloalkyl, Phenyl oder Naphthyl bedeutet.

Als organisches Brückenglied kommt für B z.B. gegebenenfalls substituiertes C₁-C₁₂-Alkylen, welches durch 1, 2 oder 3 Glieder aus der Gruppe -NH-, -N(CH₃)- oder -O- unterbrochen sein kann, oder gegebenenfalls substituiertes C₅-C₇-Cycloalkylen, Phenylen oder Naphthylen in Betracht. Als C₅-C₇-Cycloalkylen kommt hierbei insbesondere Cyclohexylen in Betracht, welches unsubstituiert oder z.B. durch C₁-C₄-Alkyl, insbesondere durch Methyl, substituiert sein kann. Als Substituenten der genannten Phenylen- und Napthylenreste kommen hierbei z.B. C₁-C₄-Alkyl, C₁-C₄-Alkoxy, C₂-C₄-Alkanoylamino, Amino, Hydroxy, Ureido, Halogen, Carboxy oder Sulfo, insbesondere C₁-C₄-Alkyl, C₁-C₄-Alkoxy, Halogen oder Sulfo, in Betracht. Als Substituenten der genannten C₁-C₁₂-Alkylenreste kommen z.B. Hydroxy, Sulfo, Sulfato, Cyano oder Carboxy in Betracht. Vorzugsweise sind die C₁-C₁₂-Alkylenreste unsubstituiert.

Als C₁-C₄-Alkyl kommt für R' z.B. Methyl, Ethyl, Propyl, Isopropyl, Butyl, sek.-Butyl, tert.-Butyl oder Isobutyl in Betracht. Die genannten Alkylreste können unsubstituiert oder z.B. durch Hydroxy, Sulfo, Sulfato, Cyano oder Carboxy substituiert sein. Bevorzugt als Alkylreste sind die entsprechenden unsubstituierten Reste.

Als Phenyl oder Naphthyl kommen für R" neben den entsprechenden unsubstituierten Resten die beispielsweise durch C₁-C₄-Alkyl, C₁-C₄-Alkoxy, C₂-C₄-Alkanoylamino, Amino, Hydroxy, Ureido, Halogen, Carboxy oder Sulfo substituierten Reste in Betracht.

Als C₅-C₇-Cycloalkyl kommt für R" insbesondere der Cyclohexylrest in Betracht. Die genannten Cycloalkylreste können unsubstituiert oder z.B. durch C₁-C₄-Alkyl, insbesondere durch Methyl, substituiert sein.

Als C₁-C₈-Alkyl kommen für R" vorzugsweise C₁-C₄-Alkylreste, wie z.B. Methyl, Ethyl, Propyl, Isopropyl, Butyl, sek.-Butyl, tert.-Butyl oder Isobutyl, in Betracht. Die genannten Alkylreste können für R" unsubstituiert oder z.B. durch Hydroxy, Sulfo, Sulfato, Cyano oder Carboxy substituiert sein. Bevorzugt sind hierbei für R" die unsubstituierten Reste.

B ist bevorzugt ein C₁-C₁₂-Alkylenrest, insbesondere ein C₁-C₁₀-Alkylenrest, welcher durch 1, 2 oder 3 Glieder aus der Gruppe -NH-, -N(CH3)- oder insbesondere -O- unterbrochen sein kann und unsubstituiert oder durch Hydroxy, Sulfo, Sulfato, Cyano oder Carboxy substituiert ist. Von besonderem Interesse sind hierbei die entsprechenden unsubstituierten Alkylenreste.

Besonders bevorzugt ist B ein C₁-C₁₀-Alkylenrest, insbesondere ein C₁-C₆-Alkylenrest und vorzugsweise ein C₁-C₄-Alkylenrest. Besonders interessante Reste B sind solche der Formeln -CH₂-, -CH₂CH₂- und -CH₂CH₂CH₂-.

R' ist bevorzugt Wasserstoff oder gegebenenfalls durch Hydroxy, Sulfo, Sulfato, Cyano oder Carboxy substituiertes C₁-C₄-Alkyl, vorzugsweise Wasserstoff oder C₁-C₄-Alkyl und insbesondere Wasserstoff.

R" ist bevorzugt gegebenenfalls durch C₁-C₄-Alkyl, C₁-C₄-Alkoxy, Halogen, Carboxy oder Sulfo substituiertes Phenyl oder insbesondere C₁-C₈-Alkyl. Besonders bevorzugt ist R" C₁-C₄-Alkyl, insbesondere Methyl oder Ethyl und vorzugsweise Methyl.

Bevorzugt ist W Wasserstoff.

Als C₁-C₄-Alkyl kommen für X und R unabhängig voneinander z.B. Methyl, Ethyl, n- oder iso-Propyl oder n-, sec.-, tert.- oder iso-Butyl, insbesondere Methyl oder Ethyl, in Betracht. X C₁-C₄-Alkyl ist gegebenenfalls durch Hydroxy substituiert und vorzugsweise unsubstituiert.

Als C₁-C₄-Alkoxy kommt für R z.B. Methoxy, Ethoxy, n-Propoxy, Isopropoxy, n-Butoxy oder Isobutoxy, vorzugsweise Methoxy oder Ethoxy und insbesondere Methoxy, in Betracht.

R als Halogen bedeutet z.B. Fluor, Chlor oder Brom, vorzugsweise Chlor oder Brom und insbesondere Chlor.

Als alkalisch abspaltbare Gruppe Z kommt z.B. -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ in Betracht. Bevorzugt ist Z eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Bevorzugt sind die erfindungsgemässen Tinten, worin
R C₁-C₄-Alkyl oder Halogen bedeutet.

Bevorzugt sind die erfindungsgemässen Tinten, worin
Z -OSO₃H, -Cl, gegebenenfalls im Alkylteil durch Hydroxy, Sulfo oder Carboxy substituiertes und/oder durch ein, zwei oder drei Sauerstoffatome unterbrochenes C₁-C₁₂-Alkoxy, gegebenenfalls im Alkylteil durch Hydroxy, Sulfo oder Carboxy substituiertes C₁-C₄-Alkylthio, Amino, gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes und/oder durch ein, zwei oder drei Sauerstoffatome oder -NR₁- Gruppen unterbrochenes N-Mono- oder N,N-Di-C₁-C₁₄-Alkylamino, wobei R₁ Wasserstoff oder gegebenenfalls durch Amino substituiertes C₁-C₄-Alkyl bedeutet, C₂₀-Diterpenamino, gegebenenfalls durch C₁-C₄-Alkyl oder Carboxyl substituiertes C₅-C₇-Cycloalkylamino, gegebenenfalls durch Carboxymethyl, C₁-C₄-Alkoxy, Carboxy, Carbamoyl, N-C₁-C₄-Alkylcarbamoyl, welches seinerseits im Alkylteil durch Carboxy weitersubstituiert sein kann, Sulfo oder Halogen substituiertes Phenylamino oder N-C₁-C₄-Alkyl-N-phenylamino, im Arylteil durch Sulfo substituiertes Naphthylamino, Morpholino, gegebenenfalls am Stickstoff durch 2-Aminoethyl oder 3-Aminopropyl substituiertes Piperazin-1-yl oder Piperidin-1-yl bedeutet.

Besonders bevorzugt sind die erfindungsgemässen Tinten, worin
Z -OSO₃H, gegebenenfalls im Alkylteil durch Hydroxy, Sulfo oder Carboxy substituiertes C₁-C₄-Alkylthio, Amino, gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes und/oder durch ein, zwei oder drei Sauerstoffatome oder -NH- Gruppen unterbrochenes N-Mono- oder N,N-Di-C₁-C₁₄-Alkylamino, C₂₀-Diterpenamino, gegebenenfalls durch Carboxymethyl, C₁-C₄-Alkoxy, Carboxy, Carbamoyl, N-C₁-C₄-Alkylcarbamoyl, welches seinerseits im Alkylteil durch Carboxy weitersubstituiert sein kann, Sulfo oder Halogen substituiertes Phenylamino oder N-C₁-C₄-Alkyl-N-phenylamino, im Arylteil durch Sulfo substituiertes Naphthylamino, Morpholino, gegebenenfalls am Stickstoff durch 2-Aminoethyl substituiertes Piperazin-1-yl oder Piperidin-1-yl bedeutet.

Ganz besonders bevorzugt sind die erfindungsgemässen Tinten, worin
Z -OSO₃H, gegebenenfalls im Alkylteil durch Hydroxy, Sulfo oder Carboxy substituiertes C₁-C₄-Alkylthio, Amino, gegebenenfalls im Alkylteil durch Phenyl, welches seinerseits durch Carboxy substituiert sein kann, Amino, Hydroxy, Sulfo, Sulfato, Carboxy oder Carbamoyl substituiertes und/oder durch ein oder zwei Sauerstoffatome oder -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder gegebenenfalls am Stickstoff durch 2-Aminoethyl substituiertes Piperazin-1-yl bedeutet.

In einer ganz besonders wichtigen Ausführungsform der erfindungsgemässen Tinten bedeutet
Z -OSO₃H, Amino, gegebenenfalls im Alkylteil durch Phenyl, welches seinerseits durch Carboxy substituiert sein kann, Amino, Hydroxy, Sulfo, Sulfato, Carboxy oder Carbamoyl substituiertes und/oder durch ein oder zwei Sauerstoffatome oder -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder gegebenenfalls am Stickstoff durch 2-Aminoethyl substituiertes Piperazin-1-yl.

X bedeutet Hydroxy, gegebenenfalls durch Hydroxy substituiertes C₁-C₄-Alkyl, Vinyl oder einen Rest -CH₂-CH₂-Z, worin Z die oben angegebene Bedeutung und Bevorzugung hat, oder X hat die oben für Z angegebene Bedeutung, mit Ausnahme von Z in der Bedeutung einer alkalisch abspaltbaren Gruppe.

Bevorzugt bedeutet X Hydroxy, gegebenenfalls durch Hydroxy substituiertes C₁-C₄-Alkyl, Vinyl oder einen Rest -CH₂-CH₂-Z, worin Z die oben angegebene Bedeutung und Bevorzugung hat, oder X steht bevorzugt für Amino, gegebenenfalls im Alkylteil substituiertes und/oder durch Sauerstoff oder einen Rest -NR₁- unterbrochenes N-Monooder N,N-Di-C₁-C₂₄-Alkylamino, wobei R₁ Wasserstoff oder gegebenenfalls weitersubstituiertes C₁-C₄-Alkyl bedeutet, gegebenenfalls im Cycloalkylring substituiertes C₅-C₇-Cycloalkylamino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl, wobei die oben für Z angegebene Bedeutung und Bevorzugung in entsprechender Weise auch für X gilt.

Besonders bevorzugt bedeutet X Hydroxy, C₁-C₄-Alkyl oder einen Rest -CH₂-CH₂-Z, worin Z die oben angegebene Bedeutung und Bevorzugung hat, oder X steht besonders bevorzugt für Amino, gegebenenfalls im Alkylteil durch Phenyl, welches seinerseits durch Carboxy substituiert sein kann, Amino, Hydroxy, Sulfo, Sulfato, Carboxy oder Carbamoyl substituiertes und/oder durch ein oder zwei Sauerstoffatome oder -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder gegebenenfalls am Stickstoff durch 2-Aminoethyl substituiertes Piperazin-1-yl.

Ganz besonders bevorzugt steht X für Hydroxy; einen Rest -CH₂-CH₂-Z, worin Z -OSO₃H, gegebenenfalls im Alkylteil durch Hydroxy, Sulfo oder Carboxy substituiertes C₁-C₄-Alkylthio, Amino, gegebenenfalls im Alkylteil durch Phenyl, welches seinerseits durch Carboxy substituiert sein kann, Amino, Hydroxy, Sulfo, Sulfato, Carboxy oder Carbamoyl substituiertes und/oder durch ein oder zwei Sauerstoffatome oder -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder gegebenenfalls am Stickstoff durch 2-Aminoethyl substituiertes Piperazin-1-yl bedeutet;
oder X steht ganz besonders bevorzugt für Amino, gegebenenfalls im Alkylteil durch Phenyl, welches seinerseits durch Carboxy substituiert sein kann, Hydroxy, Sulfo, Sulfato oder Carboxy substituiertes N-Mono-C₁-C₄-Alkylamino, gegebenenfalls im Alkylteil durch Hydroxy, Sulfo oder Carboxy substituiertes N,N-Di-C₁-C₄-Alkylamino, Morpholino oder gegebenenfalls am Stickstoff durch 2-Aminoethyl substituiertes Piperazin-1-yl.

Ganz besonders wichtig ist für X die Bedeutung Hydroxy, Amino, Methylamino, Ethylamino, oder -CH₂-CH₂-OSO₃H; und insbesondere der Rest -CH₂-CH₂-OSO₃H.

In einer bevorzugten Ausführungsform der erfindungsgemässen Tinten bedeutet
m die Zahl 0 oder 1, insbesondere 0, und
n die Zahl 1 oder 2, insbesondere 1.

Bevorzugt sind die erfindungsgemässen Tinten, worin
X für Hydroxy; einen Rest -CH₂-CH₂-Z, worin Z -OSO₃H, gegebenenfalls im Alkylteil durch Hydroxy, Sulfo oder Carboxy substituiertes C₁-C₄-Alkylthio, Amino, gegebenenfalls im Alkylteil durch Phenyl, welches seinerseits durch Carboxy substituiert sein kann, Amino, Hydroxy, Sulfo, Sulfato, Carboxy oder Carbamoyl substitutertes und/oder durch ein oder zwei Sauerstoffatome oder -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder gegebenenfalls am Stickstoff durch 2-Aminoethyl substituiertes Piperazin-1-yl bedeutet; oder
X für Amino, gegebenenfalls im Alkylteil durch Phenyl, welches seinerseits durch Carboxy substituiert sein kann, Hydroxy, Sulfo, Sulfato oder Carboxy substituiertes N-Mono-C₁-C₄-Alkylamino, gegebenenfalls im Alkylteil durch Hydroxy, Sulfo oder Carboxy substituiertes N,N-Di-C₁-C₄-Alkylamino, Morpholino oder gegebenenfalls am Stickstoff durch 2-Aminoethyl substituiertes Piperazin-1-yl, steht;
R C₁-C₄-Alkyl oder Halogen ist;
m für die Zahl 0 oder 1 steht und
n die Zahl 1 oder 2 ist.

Besonders bevorzugt sind die erfindungsgemässen Tinten, worin
der Farbstoff der Formel (1) ein Farbstoff der Formel (2) 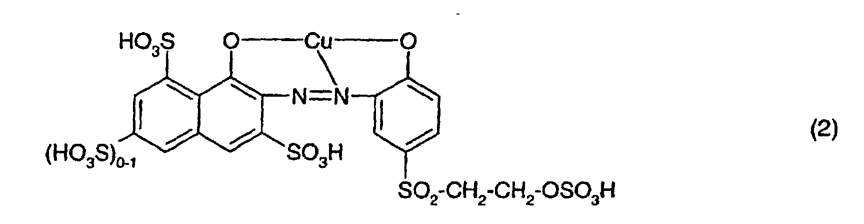 ist.

Die in den Tinten verwendeten Farbstoffe sollten vorzugsweise salzarm sein, d.h. einen Gesamtgehalt an Salzen von weniger als 0,5 Gew.-%, bezogen auf das Gewicht der Farbstoffe, enthalten. Farbstoffe, die, bedingt durch ihre Herstellung und/oder die nachträgliche Zugabe von Coupagemitteln grössere Salzgehalte aufweisen, können z.B. durch Membrantrennverfahren, wie Ultrafiltration, Umkehrosmose oder Dialyse, entsalzt werden.

Die Tinten enthalten bevorzugt einen Gesamtgehalt an Farbstoffen von 0,5 bis 35 Gew.-%, insbesondere 1 bis 30 Gew.-% und vorzugsweise 1 bis 20 Gew.-%, bezogen auf das Gesamtgewicht der Tinte. Als untere Grenze ist hierbei eine Grenze von 1,5 Gew.-%, vorzugsweise 2 Gew.-% und insbesondere 3 Gew.-%, bevorzugt.

Die Tinten können organische Lösungsmittel, z.B. mit Wasser mischbare organische Lösungsmittel, enthalten, beispielsweise C₁-C₄-Alkohole, wie z.B. Methanol, Ethanol, n-Propanol, Isopropanol, n-Butanol, sec.-Butanol, tert.-Butanol oder Isobutanol; Amide, wie z.B. Dimethylformamid oder Dimethylacetamid; Ketone oder Ketonalkohole, wie z.B. Aceton, Methylisobutylketon, Diacetonalkohol; Ether wie z.B. Tetrahydrofuran oder Dioxan; Stickstoff enthaltende heterocyclische Verbindungen, wie z.B. N-Methyl-2-pyrrolidon oder 1,3-Dimethyl-2-imidazolidon, Polyalkylenglykole, wie z.B. Polyethylenglykol oder Polypropylenglykol; C₂-C₆-Alkylenglykole und Thioglykole, wie z.B. Ethylenglykol, Propylenglykol, Butylenglykol, 1,5-Pentandiol, Thiodiglykol, Hexylenglykol, Diethylenglykol, Triethylenglykol, Tetraethylenglykol oder Diethylenglykolmonobutylether; weitere Polyole, wie z.B. Glycerin, oder 1,2,6-Hexantriol; und C₁-C₄-Alkylether von mehrwertigen Alkoholen, wie z.B. 2-Methoxyethanol, 1-Methoxypropanol, 2-(2-Methoxyethoxy)ethanol, 2-(2-Ethoxyethoxy)-ethanol, 2-[2-(2-Methoxyethoxy)ethoxy]-ethanol oder 2-[2-(2-Ethoxyethoxy)ethoxy]ethanol; bevorzugt N-Methyl-2-pyrrolidon, Diethylenglykol, Glycerin oder insbesondere 1,2-Propylenglykol, üblicherweise in einer Menge von 2 bis 30 Gew.-%, insbesondere 5 bis 30 Gew.-% und vorzugsweise 10 bis 25 Gew.-%, bezogen auf das Gesamtgewicht der Tinte.

Weiterhin können die Tinten noch Lösungsvermittler, wie z.B. ε-Caprolactam, enthalten.

Die Tinten können, u.a. zwecks Einstellung der Viskosität, Verdickungsmittel natürlicher oder synthetischer Herkunft enthalten.

Als Beispiele für Verdickungsmittel seien handelsübliche Alginatverdickungen, Stärkeether oder Johannisbrotkernmehlether, insbesondere Natriumalginat für sich allein oder im Gemisch mit modifizierter Cellulose, wie z.B. Methyl-, Ethyl-, Carboxymethyl-, Hydroxyethyl-, Methylhydroxyethyl-, Hydroxypropyl- oder Hydroxypropylmethylcellulose, insbesondere mit vorzugsweise 20 bis 25 Gewichtsprozent Carboxymethylcellulose, genannt. Als synthetische Verdickungsmittel seien ferner z.B. solche auf Basis von Poly(meth)acrylsäuren oder Poly(meth)acrylamiden genannt.

Die Tinten enthalten solche Verdickungsmittel einer Menge von 0,01 bis 2 Gew.-%, insbesondere 0,01 bis 1 Gew.-% und vorzugsweise 0,01 bis 0,5 Gew.-%, bezogen auf das Gesamtgewicht der Tinte.

Ferner können die Tinten Puffersubstanzen enthalten, wie z.B. Borax, Borat, Phosphat, Polyphosphat oder Citrat. Als Beispiele seien Borax, Natriumborat, Natriumtetraborat, Natriumdihydrogenphosphat, Dinatriumhydrogenphosphat, Natriumtripolyphosphat, Natriumpentapolyphosphat sowie Natriumcitrat genannt. Sie werden insbesondere in Mengen von 0,1 bis 3 Gew.-%, vorzugsweise 0,1 bis 1 Gew.-%, bezogen auf das Gesamtgewicht der Tinte, verwendet, um einen pH-Wert von z.B. 4 bis 9, insbesondere 5 bis 8,5, einzustellen.

Als weitere Zusätze können die Tinten Tenside oder Feuchthaltemittel enthalten.

Als Tenside kommen die handelsüblichen anionischen oder nichtionogenen Tenside in Betracht. Als Feuchthaltemittel kommen z.B. Harnstoff oder eine Mischung von Na-Lactat (vorteilhafterweise in Form einer 50 bis 60%-igen wässrigen Lösung) und Glycerin und/oder Propylenglykol in Mengen von vorzugsweise 0,1 bis 30 Gew.-%, insbesondere 2 bis 30 Gew.-%, in den erfindungsgemässen Tinten in Betracht.

Bevorzugt sind Tinten, welche eine Viskosität von 1 bis 40 mPa·s, insbesondere 1 bis 20 mPa·s und vorzugsweise 1 bis 10 mPa·s aufweisen.

Weiterhin können die Tinten noch übliche Zusätze, wie z.B. schaumdämpfende Mittel oder insbesondere das Pilz- und/oder Bakterienwachstum hemmende Stoffe, enthalten. Diese werden üblicherweise in Mengen von 0,01 bis 1 Gew.-%, bezogen auf das Gesamtgewicht der Tinte, verwendet.

Die Tinten können in üblicher Weise durch Mischen der einzelnen Bestandteile, z.B. in der gewünschten Menge Wasser, hergestellt werden.

Die erfindungsgemässen Tinten sind insbesondere für die Verwendung in Aufzeichnungssystemen solcher Art geeignet, bei welchen eine Tinte aus einer kleinen Öffnung in Form von Tröpfchen ausgepresst wird, welche gegen ein Substrat gerichtet werden, auf welchem ein Bild entsteht. Geeignete Substrate sind z.B. textile Fasermaterialien, Papier, Kunststoff oder Aluminium-Folien. Geeignete Aufzeichnungssysteme sind z.B. handelsübliche Tintenstrahldrucker für die Anwendung im Papier- oder Textildruck, oder Schreibgeräte wie Füllfederhalter oder Kugelschreiber und insbesondere Tintenstrahldrucker.

Je nach Art der Verwendung ist es gegebenenfalls erforderlich z.B. die Viskosität oder andere physikalische Eigenschaften der Tinte, insbesondere solche, die einen Einfluss auf die Affinität zum jeweiligen Substrat haben, entsprechend anzupassen. Für das Bedrucken von textilen Fasermaterialien, Papier oder Kunststoff-Folien werden vorzugsweise wässrige Tinten verwendet.

Als Beispiele für Papier, das mit den erfindungsgemässen Tinten bedruckt werden kann seien handelsübliches Ink-Jet Papier, Photopapier, Glanzpapier, mit Kunststoff beschichtetes Papier, wie z.B. Epson Ink-Jet Paper, Epson Photo Paper, Epson Glossy Paper, Epson Glossy Film, HP Special Ink-Jet Paper, Encad Photo Gloss Paper, llford Photo Paper genannt. Kunststoff-Folien, die mit den erfindungsgemässen Tinten bedruckt werden können sind beispielsweise transparent oder milchig/undurchsichtig. Geeignete Kunststoff-Folien sind z.B. 3M Transparency-Film. Bevorzugt ist Glanzpapier, wie z.B. Epson Glossy Paper.

Als textile Fasermaterialien kommen insbesondere stickstoffhaltige oder hydroxygruppenhaltige Fasermaterialien, wie z.B. textile Fasermaterialien aus Cellulose, Seide, Wolle oder synthetischen Polyamiden, in Betracht.

Beispiele für Aluminium-Folien sind oberflächenbehandelte Folien, z.B. vinyl-lackierte Aluminium-Folien.

Gegenstand der vorliegenden Erfindung ist somit auch ein Verfahren zum Bedrucken von Papier, textilen Fasermaterialien, Kunststoff- oder Aluminium-Folien, vorzugsweise Papier, textilen Fasermaterialien Kunststoff-Folien und insbesondere Papier, nach dem Tintenstrahldruck-Verfahren, dadurch gekennzeichnet, dass man eine Tinte, vorzugsweise eine wässrige Tinte, verwendet, die einen Farbstoff der Formel (1) enthält, wobei für X, R, m und n die unter der Formel (1) angegebenen Bedeutungen und Bevorzugungen gelten.

Im Falle des Tintenstrahldruck-Verfahrens werden einzelne Tropfen der Tinte kontrolliert aus einer Düse auf ein Substrat gespritzt. Ueberwiegend werden hierzu die kontinuierliche Ink-Jet-Methode sowie die Drop on demand-Methode verwendet. Im Falle der kontinuierlichen Ink-Jet-Methode werden die Tropfen kontinuierlich erzeugt, wobei nicht für den Druck benötigte Tropfen in einen Auffangbehälter abgeleitet und rezykliert werden. Im Falle der Drop on demand-Methode hingegen werden Tropfen nach Wunsch erzeugt und gedruckt; d.h. es werden nur dann Tropfen erzeugt, wenn dies für den Druck erforderlich ist. Die Erzeugung der Tropfen kann z.B. mittels eines Piezo-Inkjet-Kopfes oder mittels thermischer Energie (Bubble Jet) erfolgen. Bevorzugt ist für das erfindungsgemässe Verfahren der Druck mittels eines Piezo-Inkjet-Kopfes. Bevorzugt ist für das erfindungsgemässe Verfahren ferner der Druck nach der kontinuierlichen Ink-Jet-Methode.

Die hergestellten Aufzeichnungen, wie beispielsweise Drucke, zeichnen sich insbesondere durch gute Lichtechtheiten und eine hohe Farbbrillanz aus.

Gegenstand der vorliegenden Erfindung sind weiterhin Farbstoffe der Formel (1a) 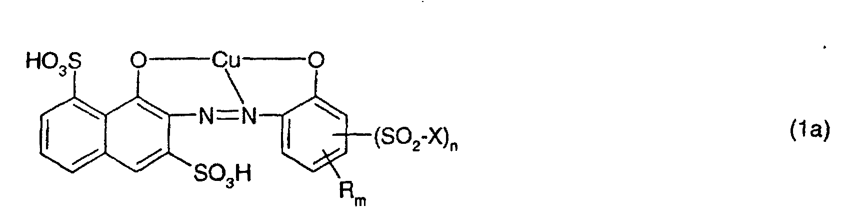 worin
für X, R, m und n die unter der Formel (1) angegebenen Bedeutungen und Bevorzugungen gelten, und
Farbstoffe der Formel (1b) 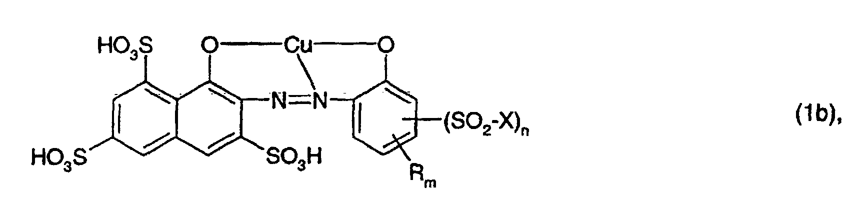 worin
X Hydroxy; gegebenenfalls durch Hydroxy substituiertes C₁-C₄-Alkyl; oder einen Rest -CH₂-CH₂-Z bedeutet, wobei Z gegebenenfalls im Alkylteil substituiertes und/oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes und/oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstituiertes C₁-C₄-Alkyl bedeutet, C₁₀-C₂₀-Terpenamino, gegebenenfalls im Cycloalkylring substituiertes C₅-C₇-Cycloalkylamino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl ist; oder X die Bedeutung von Z hat;
R C₁-C₄-Alkyl, C₁-C₄-Alkoxy oder Halogen bedeutet; und
m und n unabhängig voneinander die Zahl 0, 1 oder 2 sind.

Für X, R, m und n in den Farbstoffen der Formel (1b) gelten die unter der Formel (1) angegebenen Bedeutungen und Bevorzugungen in entsprechender Weise.

Gegenstand der vorliegenden Erfindung ist ferner ein Verfahren zur Herstellung von Farbstoffen der Formel (1a) oder (1b), dadurch gekennzeichnet, dass
man eine Verbindung der Formel (3) 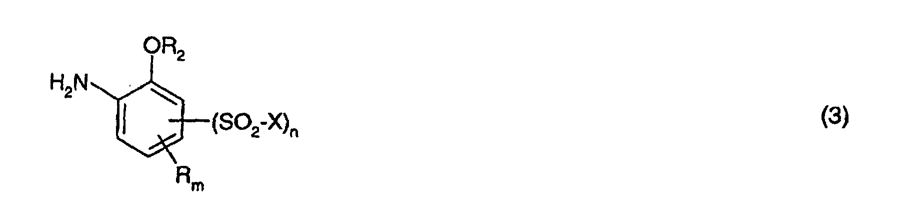 diazotiert, die erhaltene Diazoverbindung auf die Verbindung der Formel (4) 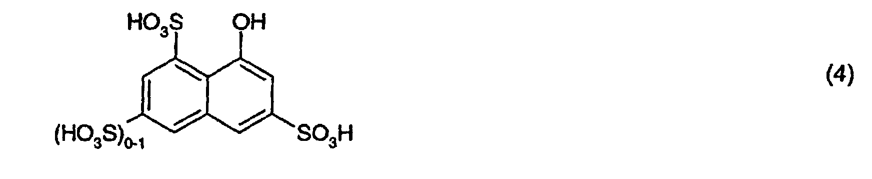 kuppelt und den entstandenen Azofarbstoff mit kupferabgebenden Mitteln kupfert, wobei R₂ für Wasserstoff oder C₁-C₄-Alkyl, insbesondere Wasserstoff oder Methyl, steht und für R, X, m und n die jeweils oben unter der Formel (1a) oder (1b) angegebenen Bedeutungen und Bevorzugungen gelten; oder, vorzugsweise,
eine Verbindung der Formel (3), worin X Vinyl oder -CH₂-CH₂-Z und Z eine alkalisch abspaltbare Gruppe, insbesondere -OSO₃H, bedeutet, diazotiert, die erhaltene Diazoverbindung auf die Verbindung der Formel (4) kuppelt, den entstandenen Azofarbstoff mit kupferabgebenden Mitteln kupfert und den erhaltenen Kupferkomplexazofarbstoff gegebenenfalls mit mindestens einer äquimolaren Menge einer Verbindung der Formel (5)

Z-H (5)

umsetzt, wobei für Z die oben angegebene Bedeutung und Bevorzugung mit Ausnahme einer alkalisch abspaltbaren Gruppe gelten.

Die Verbindungen der Formeln (3), (4) und (5) sind bekannt oder lassen sich nach an sich bekannten Verfahren herstellen.

So lässt sich die Verbindung der Formel (3), worin X -CH₂-CH₂-Z und Z die oben angegebene Bedeutung und Bevorzugung mit Ausnahme einer alkalisch abspaltbaren Gruppe hat, beipielsweise aus der entsprechenden Vorstufe der Verbindung der Formel (3), worin X Vinyl oder -CH₂-CH₂-Z und Z eine alkalisch abspaltbare Gruppe, insbesondere -OSO₃H, bedeutet, durch Umsetzung mit mindestens einer äquimolaren Menge einer Verbindung der Formel (5), z.B. unter den nachfolgend beschriebenen Bedingungen, herstellen.

Die Diazotierung des Amins der Formel (3) erfolgt in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei 0 bis 20°C.

Die Kupplung auf die Kupplungskomponente der Formel (4) erfolgt in an sich bekannter Weise, bei sauren, neutralen bis schwach alkalischen pH-Werten, z.B. einem pH-Wert von 0 bis 8 und Temperaturen von beispielsweise -5 bis 40°C, vorzugsweise 0 bis 30°C.

Als kupferabgebendes Mittel kann man Salze verwenden, welche das Kupfer als Kation enthalten, z.B. Kupfersulfat, Kupferchlorid oder Kupferacetat. In manchen Fällen ist die Verwendung komplexer Kupferverbindungen von Vorteil, z.B. in Form von Kupfer-Amin-Komplexen, wie Kupfertetraminsulfate aus Kupfersulfat und Ammoniak, Pyridin oder Monoethanolamin, oder in Form von Verbindungen, welche das Kupfer komplex gebunden enthalten, z.B. komplexer Kupferverbindungen der Alkalisalze aliphatischer Aminocarbonsäuren oder Hydroxycarbonsäuren, wie des Glycins, der Milchsäure und vor allem der Weinsäure, wie Natriumkupfertartrat.

Die Behandlung mit dem kupferabgebenden Mittel erfolgt in an sich bekannter Weise, z.B. in wässrigem oder organisch-wässrigem Medium, z.B. bei Raumtemperatur, falls leicht metallisierbare Ausgangsverbindungen vorliegen oder, wenn gleichzeitig mit der Metallisierung eine Entalkylierung stattfinden muss, durch Erwärmen auf Temperaturen zwischen 50 und 120°C im offenen Gefäss, z.B. unter Rückflusskühlung oder gegebebenenfalls im geschlossenen Gefäss unter Druck, wobei die pH-Verhältnisse durch die Art des gewählten Metallisierungsverfahrens gegeben sind; z.B eine saure Kupferung mit Kupfersulfat, insbesondere in Gegenwart von Alkaliacetat, z.B. Natriumacetat, oder eine alkalische Kupferung mit Kupfertetraminsulfat.

Zweckmässigerweise verwendet man einen Überschuss der Verbindung der Formel (5) beispielsweise einen 1,2 bis 20 molaren, vorzugsweise 1,5 bis 10 molaren, Überschuss.

Die Umsetzung mit der Verbindung der Formel (5) wird zweckmässigerweise in Gegenwart einer Base, z.B. einem Alkalihydroxid, Alkalialkoholat oder Benzyltrimethylammoniumhydroxid, vorzugsweise einem Alkalihydroxid, z.B. Natriumhydroxid oder Kaliumhydroxid, oder einer Säure, z.B. Schwefelsäure, Eisessig oder Bortrifluorid, vorzugsweise einer Base, durchgeführt.

Ammoniak und aliphatische Amine sind hinreichend basisch, um unter milden Bedingungen, teilweise auch ohne die Gegenwart einer Base oder Säure, addiert zu werden. Bei aromatischen Aminen müssen dagegen höhere Temperaturen, z.B. Temperaturen über 100°C, angewendet werden. Die Reaktionsbedingungen richten sich dabei insbesondere nach der Nukleophilie der Verbindung der Formel (5). Die Umsetzung wird zweckmässigerweise bei Temperaturen von 10 bis 120°C, vorzugsweise 15 bis 100°C und insbesondere 20 bis 75°C, durchgeführt. Diese Abhängigkeiten sind allgemein bekannt und in der Literatur hinreichend beschrieben.

Die Sulfogruppen in den erfindungsgemässen Farbstoffen liegen entweder in Form der freien Sulfosäure oder vorzugsweise als deren Salz, z.B. als Natrium-, Lithium-, Kalium-, Ammoniumsalz oder als Salz eines organischen Amins, z.B. als Triethanolammoniumsalz oder als Salz der Amine Z-H der Formel (5) vor, worin Z gegebenenfalls im Alkylteil substituiertes oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstituiertes C₁-C₄-Alkyl bedeutet, C₁₀-C₂₀-Terpenamino, gegebenenfalls im Cycloalkylring substituiertes C₅-C₇-Cycloalkylamino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl bedeutet, die zur Herstellung der erfindungsgemässen Farbstoffe geeignet sind. Hierbei gilt in entsprechender Weise die oben für den Aminrest Z angegebene Bedeutung und Bevorzugung. Besonders hevorgehoben seien die Salze eines Amins der Formel 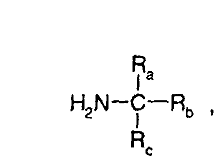 wobei die Summe der Kohlenstoffatome Rₐ + R_{b} + R_{c} 11 bis 14 beträgt (z.B. ®Primene 81 R der Firma Rohm & Haas), die sich insbesondere zum Bedrucken von Aluminium-Blechen oder Folien eignen.

Gegenstand der vorliegenden Erfindung sind somit auch die Farbstoffe der Formel (1), worin X Hydroxy; gegebenenfalls durch Hydroxy substituiertes C₁-C₄-Alkyl; Vinyl oder einen Rest -CH₂-CH₂-Z bedeutet, wobei Z eine alkalisch abspaltbare Gruppe oder gegebenenfalls im Alkylteil substituiertes und/oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes und/oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstituiertes C₁-C₄-Alkyl bedeutet, C₁₀-C₂₀-Terpenamino, gegebenenfalls im Cycloalkylring substituiertes C₅-C₇-Cycloalkyl-amino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl ist; oder X die Bedeutung von Z mit Ausnahme einer alkalisch abspaltbaren Gruppe hat;
R C₁-C₄-Alkyl, C₁-C₄-Alkoxy oder Halogen bedeutet; und
m und n unabhängig voneinander die Zahl 0, oder 2 sind;
als Salz eines Amins der Formel 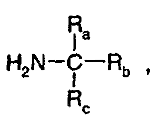 wobei die Summe der Kohlenstoffatome Rₐ + R_{b} + R_{c} 11 bis 14 beträgt.

Für X, R, m und n gelten die oben unter Formel (1) angegebenen Bedeutungen und Bevorzugungen.

Die erfindungsgemässen Farbstoffe eignen sich weiterhin zum Färben und Bedrucken von hydroxylgruppenhaltigen und stickstoffhaltigen Fasermaterialien, Papier und Aluminium-Blechen oder Aluminium-Folien nach an sich bekannten Methoden, wie beispielsweise Tauchverfahren, Rouleau- oder Filmdruck. Die erfindungsgemässen Farbstoffe eignen sich auch zum Färben oder Beizen von Holz.

Beispiele für Fasermaterialien sind Seide, Wolle, synthetische Polyamidfasern und Polyurethane sowie cellulosehaltige Fasermaterialien aller Art. Cellulosehaltige Fasermaterialien sind beispielsweise die natürliche Cellulosefaser, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Das oben genannte Textilmaterial kann in den verschiedensten Verarbeitungsformen vorliegen, wie z.B. als Faser, Garn, Gewebe oder Gewirke.

Beispiele für Aluminium-Bleche oder Folien sind oberflächenbehandelte Bleche oder Folien, z.B. vinyl-lackierte Aluminium-Bleche oder Folien.

Einen weiteren Gegenstand der vorliegenden Erfindung stellt somit die Verwendung der erfindungsgemässen Farbstoffe zum Färben oder Bedrucken von textilen Fasermaterialien, insbesondere hydroxylgruppenhaltigen oder stickstoffhaltigen Fasermaterialien, Holz, Papier, Aluminium-Blechen oder Aluminium-Folien dar.

Die erfindungsgemässen Farbstoffe können in allgemein üblicher, gegebenenfalls zuvor aufbereiteter Form zum Färben oder Bedrucken verwendet werden, beispielsweise in Form von wässrigen Farbstofflösungen für das Ausziehverfahren oder in Form von Druckpasten für die Verwendung im Schablonendruck.

Man erhält Färbungen und Drucke mit guten Allgemeinechtheiten, insbesondere guter Lichtechtheit und hoher Farbbrillanz. Färbungen und Drucke auf hydroxylgruppenhaltigen oder stickstoffhaltigen Fasermaterialien zeichnen sich ferner durch gute Reib-, Nass- und Nassreibechtheiten aus.

Einen Gegenstand der vorliegenden Erfindung stellen auch Farbstoffmischungen dar, die einen Farbstoff der Formel (1), worin
X Hydroxy; gegebenenfalls durch Hydroxy substituiertes C₁-C₄-Alkyl; Vinyl oder einen Rest -CH₂-CH₂-Z bedeutet, wobei Z eine alkalisch abspaltbare Gruppe oder gegebenenfalls im Alkylteil substituiertes und/oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes und/oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstituiertes C₁-C₄-Alkyl bedeutet, C₁₀-C₂₀-Terpenamino, gegebenenfalls im Cycloalkylring substituiertes C₅-C₇-Cycloalkyl-amino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl ist; oder X die Bedeutung von Z mit Ausnahme einer alkalisch abspaltbaren Gruppe hat;
R C₁-C₄-Alkyl, C₁-C₄-Alkoxy oder Halogen bedeutet; und
m und n unabhängig voneinander die Zahl 0, oder 2 sind;
zusammen mit mindestens einem Farbstoff aus der Gruppe
Xanthenfarbstoffe der Formel (6) 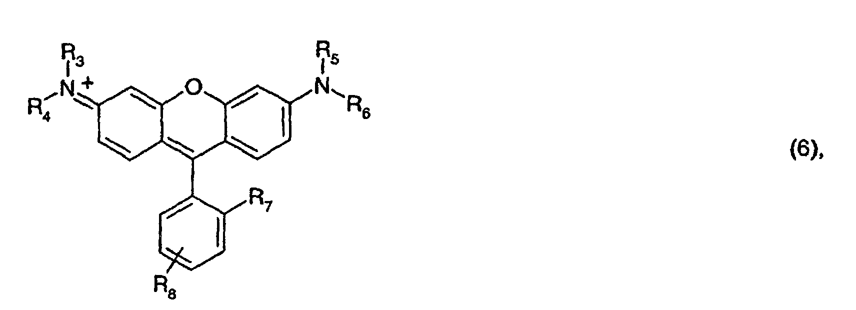 Azofarbstoffe der Formel (7) und (8) 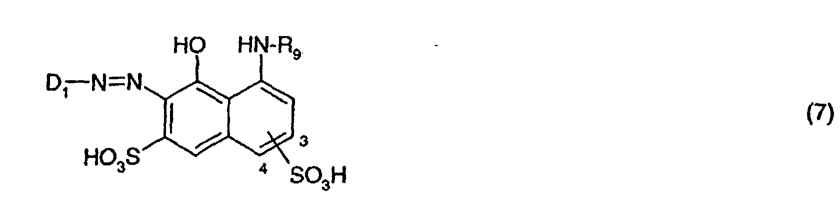 und 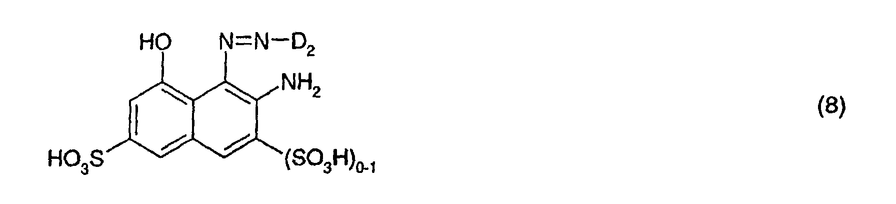 enthalten, worin
D₁ und D₂ unabhängig voneinander den Rest einer Diazokomponente der Benzol- oder Naphthalinreihe bedeuten,
R₃, R₄, R₅ und R₆ unabhängig voneinander C₁-C₄-Alkyl oder gegebenenfalls substituiertes C₅-C₇-Cycloalkyl, vorzugsweise C₁-C₄-Alkyl, sind,
R₇ und R₈ unabhängig voneinander für Sulfo oder Carboxy stehen, und
R₉ Wasserstoff oder ein Acylrest, vorzugsweise ein Acylrest, ist.

Die Zahlen an der Naphthalinkupplungskomponente des Farbstoffs der Formel (7) kennzeichnen die möglichen Bindungspositionen der Sulfogruppe.

Geeignete Reste einer Diazokomponente der Benzol- oder Naphthalinreihe für D₁ und D₂ sind beschrieben, beispielsweise in der US-A-5 750 662 (Spalten 2 bis 6). X' im Triazinylrest der Formel (5) in Spalte 3 der US-A-5 750 662 kann auch ein nicht-reaktiver Substituent sein und z.B. die in der besagten Patentschrift für V als nicht-reaktiven Substituenten angegebenen Bedeutungen haben.

Als C₁-C₄-Alkyl kommen für R₃, R₄, R₅ und R₆ unabhängig voneinander z.B. Methyl, Ethyl, n-oder iso-Propyl oder n- oder iso-Butyl, vorzugsweise Methyl oder Ethyl und insbesondere Ethyl, in Betracht.

Als C₅-C₇-Cycloalkyl kommen für R₃, R₄, R₅ und R₆ unabhängig voneinander insbesondere der Cyclohexylrest in Betracht. Die genannten Cycloalkylreste können unsubstituiert oder z.B. durch C₁-C₄-Alkyl, insbesondere Methyl, substituiert sein.

Als Acylrest kommt für R₉ beispielsweise gegebenenfalls z.B. durch C₁-C₄-Alkoxy, Halogen, Hydroxy oder Carboxy substituiertes C₁-C₄-Alkanoyl, gegebenenfalls z.B. durch C₁-C₄-Alkyl, C₁-C₄-Alkoxy, Halogen, Hydroxy, Sulfo oder Carboxy substituiertes Benzoyl, ein Triazinylrest oder ein Pyrimidylrest in Betracht. Geeignete Triazinylreste entsprechen z.B. dem Rest der Formel (5) in Spalte 3 der US-A-5 750 662, wobei X' auch ein nicht-reaktiver Substituent sein kann und z.B. die in der besagten Patentschrift für V als nicht-reaktiven Substituenten angegebenen Bedeutungen annehmen kann. Geeignete Pyrimidylreste entsprechen z.B. dem Rest der Formel (6) in Spalte 3 der US-A-5 750 662. Bevorzugt für R₉ sind ein Triazinyl- oder ein Pyrimidylrest.

Azofarbstoffe der Formel (7) schliessen auch solche Farbstoffe mit ein, worin zwei Azochromophore über R₉ als Triazinyl- oder Pyrimidylrest, vorzugsweise einen Triazinylrest, durch ein Brückenglied, z.B. einen 1,2-Diaminopropyl-, 1,4-Phenylendiamino oder 2,2'-Disulfo-4,4'-diaminostilbenrest, miteinander verbunden sind. Weitere geeignete Brückenglieder sind beschrieben, beispielsweise in der US-A-5 717 078 (Spalten 2 und 3).

Die Farbstoffe der Formeln (6), (7) und (8) sind bekannt oder lassen sich nach an sich bekannten Verfahren herstellen.

Die Farbstoffe der Formel (6), (7) und (8) sind vorzugsweise rotfärbend.

Geeignete Farbstoffe der Formel (8) sind offenbart, beispielsweise in der WO-A-99 29782, WO-A-99 31182, WO-A-96 24636 und der EP-A-0 922 735.

Geeignete Xanthenfarbstoffe der Formel (6) sind z.B. die Farbstoffe der Formeln (6a), (6b) und (6c) 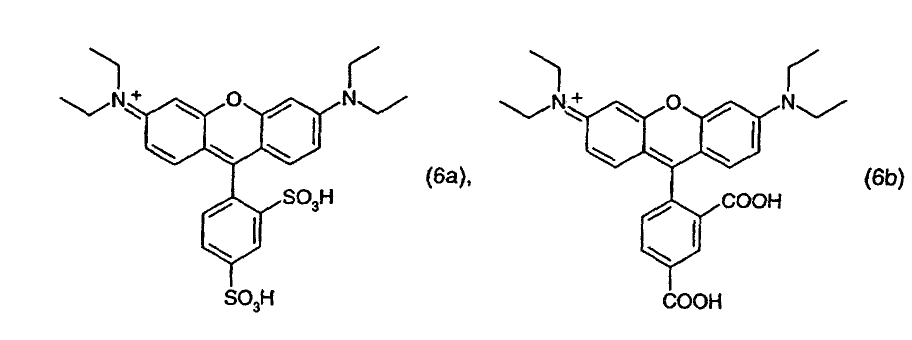 und

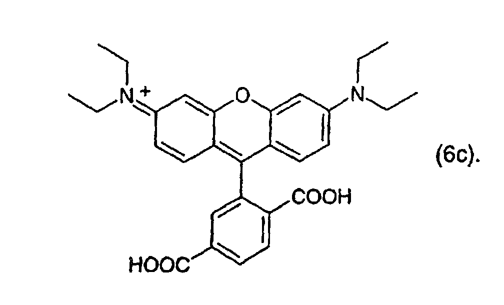

Geeignete Azofarbstoffe der Formel (7) sind z.B. die Farbstoffe der Formeln (7a), (7b), (7c), (7d), (7e), (7f), (7g), (7h), (7i), (7j) und (7k) 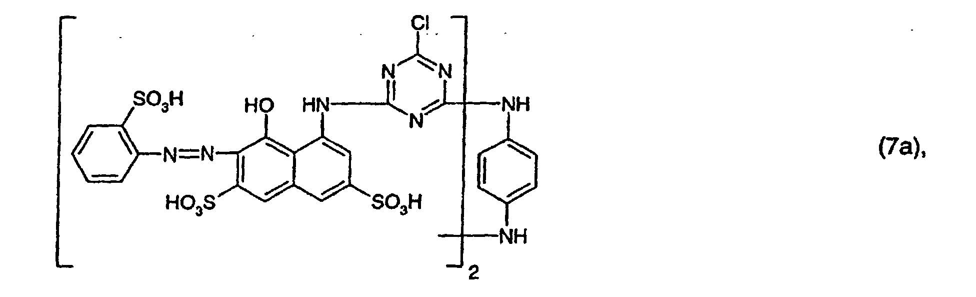 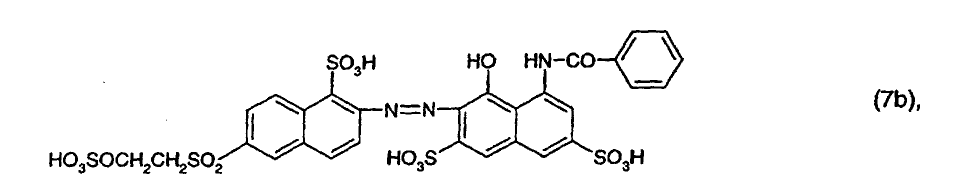 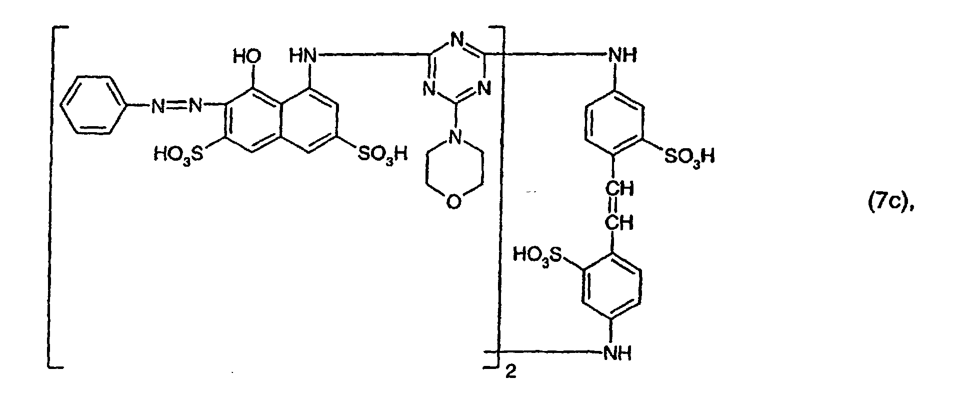 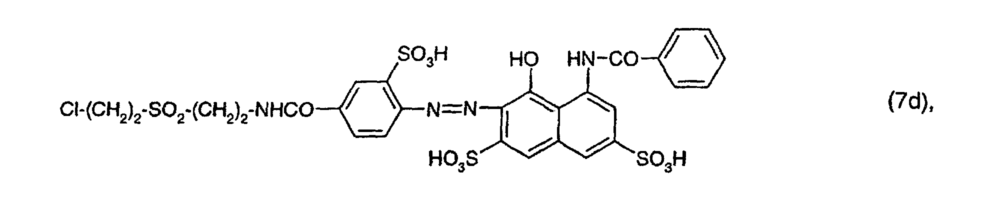 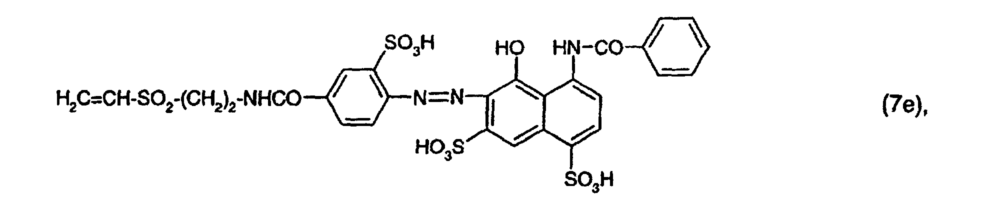 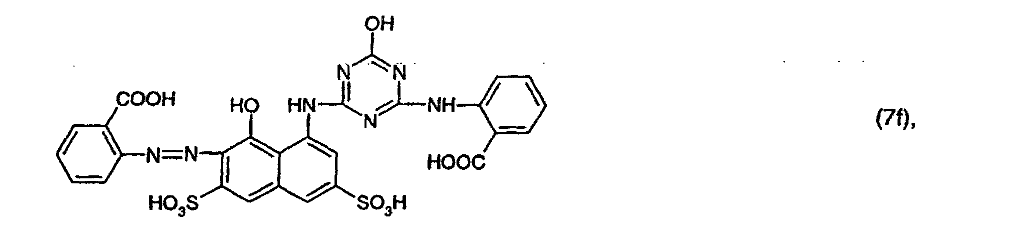 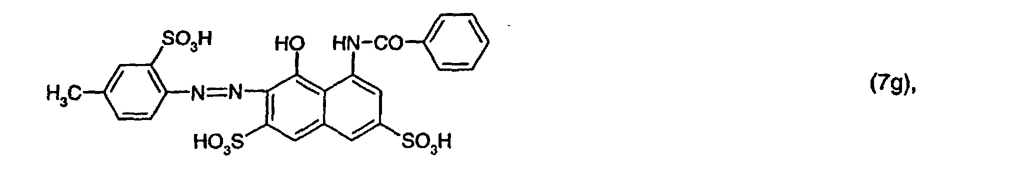 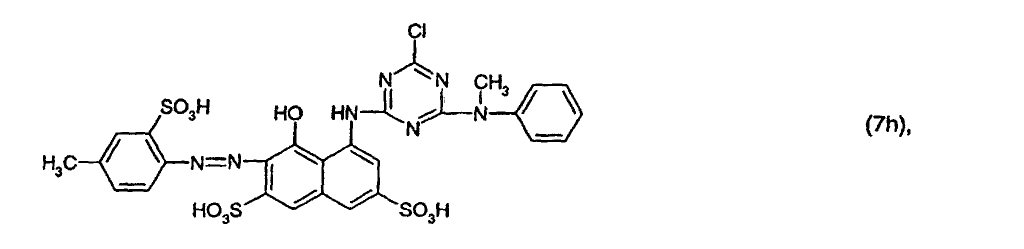 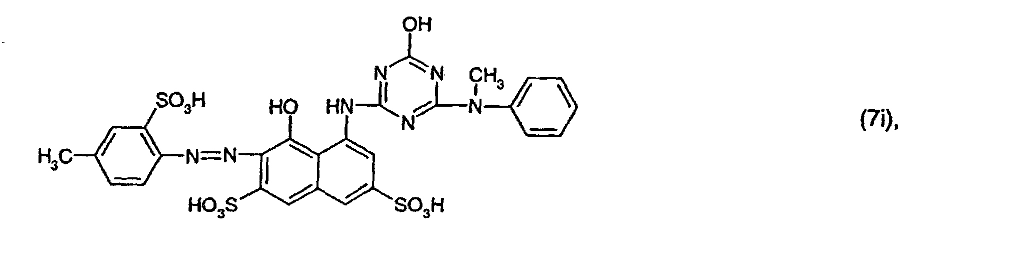 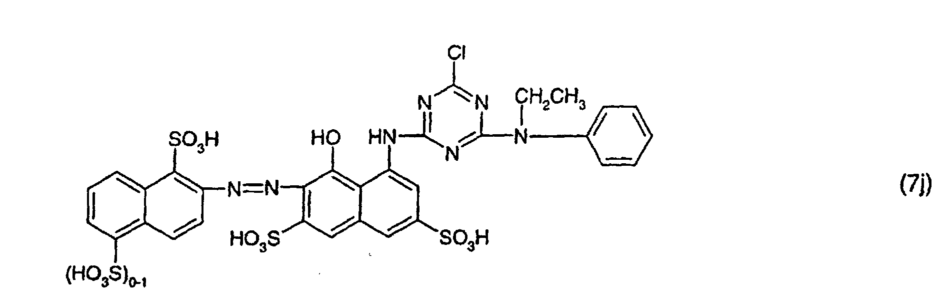 und

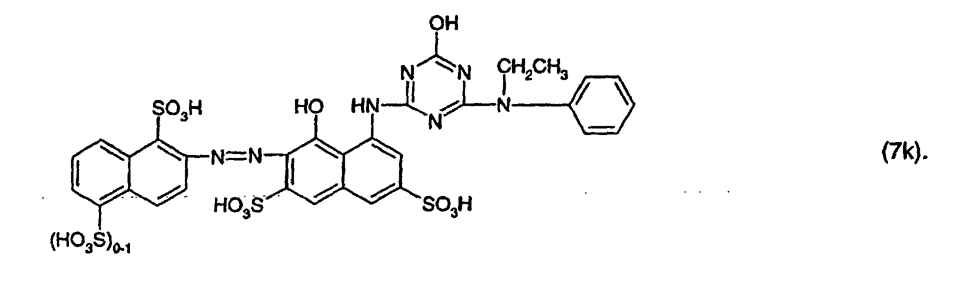

Geeignete Azofarbstoffe der Formel (8) sind z.B. die Farbstoffe der Formeln (8a), (8b) und (8c) 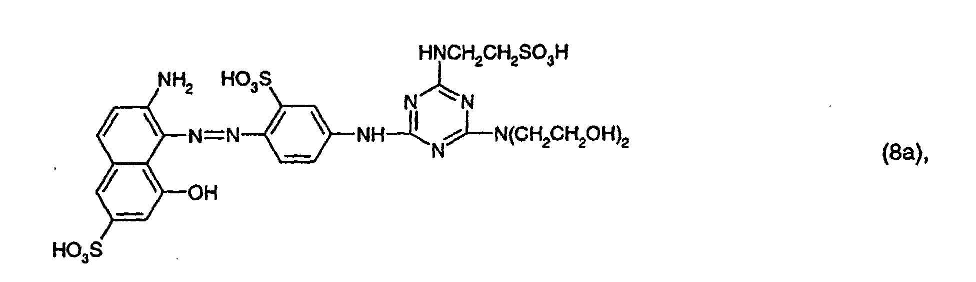 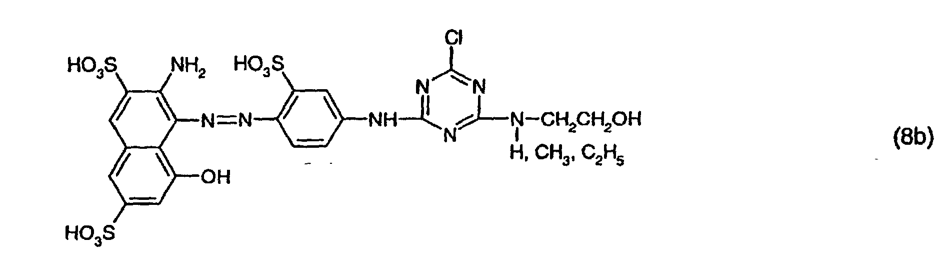 und

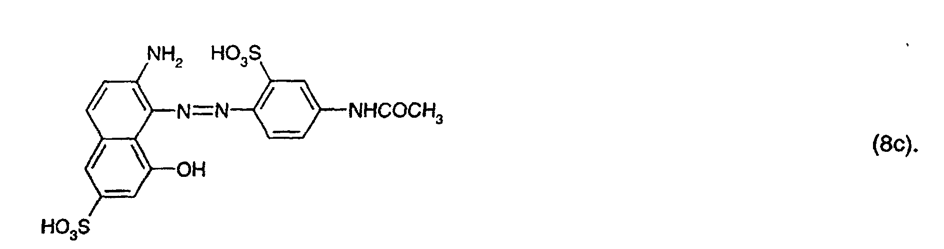

Der Farbstoff der Formel (1) liegt in dem erfindungsgemässen Farbstoffgemisch z.B. in einer Menge vom 2 bis 98 Gew.-%, vorzugsweise 5 bis 95 Gew.-%, und insbesondere 10 bis 90 Gew.-%, bezogen auf das Gesamtgewicht der Farbstoffe in der Mischung, vor.

Die erfindungsgemässen Farbstoffgemische können z.B. durch Mischen der Einzelfarbstoffe hergestellt werden. Dieser Mischprozess erfolgt z.B. in geeigneten Mühlen, z.B. Kugel- oder Stiftmühlen, sowie in Knetern oder Mixern.

Die Farbstoffmischungen eignen sich insbesondere zur Herstellung von Tinten, z.B. wässrige Tinten der oben genannten Zusammensetzungen, die, vorzugsweise in Aufzeichnungssystemen, z.B. in Tintenstrahldruckem, Verwendung finden.

Die erfindungsgemässen Farbstoffmischungen können somit auch durch gemeinsames Lösen der Einzelfarbstoffe in Wasser, zusammen mit den übrigen Bestandteilen, direkt in Form einer wässrigen Tintenformulierung erhalten werden oder sie können durch Zusammengeben solcher Tinten hergestellt werden, die die entsprechenden Einzelfarbstoffe bereits enthalten.

Die hergestellten Aufzeichnungen, wie beispielsweise Drucke, zeichnen sich insbesondere durch gute Lichtechtheiten und eine hohe Farbbrillanz aus.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1A:

a) 31 Teile eines Anilinderivats der Formel 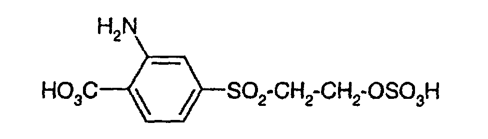 werden in 100 Teile Eiswasser eingetragen und gut verrührt. Zu der erhaltenen Suspension gibt man zunächst 50 Teile einer 31%igen Naphthalinsulfonsäurelösung und tropft dann bei 0 bis 5°C 25 Teile einer 4N Natriumnitritlösung zu. Anschliessend wird bei dieser Temperatur bis zur Beendigung der Reaktion gerührt und der Nitritüberschuss mit Sulfaminsäure zerstört. Die erhaltene saure Suspension der Diazoverbindung wird zu einer Lösung von 33,5 Teilen 1-Naphthol-3,8-disulfonsäure (ε-Säure) in 200 Teilen Wasser bei 5 bis 10°C gegeben, wobei der pH-Wert der Reaktionsmischung durch Zugabe einer Natriumacetatlösung bei 5 gehalten wird. Zur Vervollständigung der Reaktion wird über Nacht bei Raumtemperatur gerührt. Das Produkt wird mit 160 Teilen Natriumchlorid ausgesalzen, filtriert und mit einer 25%-igen Sole gewaschen. Man erhält 211,2 Teile einer noch feuchten Verbindung, die in Form der freien Säure der Formel 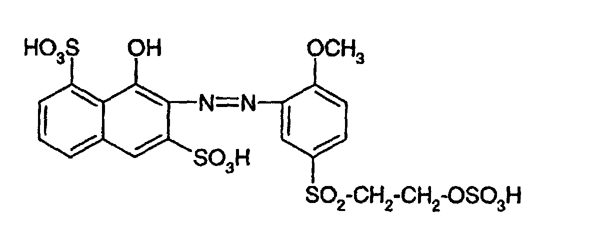 entspricht.
b) Zu einer Suspension von 211,2 Teilen der Verbindung gemäss a) in 650 Teilen Wasser werden bei Raumtemperatur 30 Teile CuSO₄ x 5 H₂O gegeben und der pH der Suspension durch Zugabe von Natriumacetat auf 4,5 gestellt. Die Suspension wird auf 90 bis 95°C erwärmt, wobei der pH durch weitere Zugabe von Natriumacetat bei 3,9 bis 4 gehalten wird. Zur Vervollständigung der Reaktion wird einige Stunden unter diesen Bedingungen gerührt (Kontrolle durch Dünnschichtchromatographie). Anschliessend lässt man auf Raumtemperatur abkühlen und stellt den pH mit Natriumacetat auf 4. Die erhaltene Mischung wird klärfiltriert, durch Umkehrosmose vom Salz befreit und gefriergetrocknet. Man erhält 88 Teile eines Farbstoffs, der in Form der freien Säure der Formel (101) 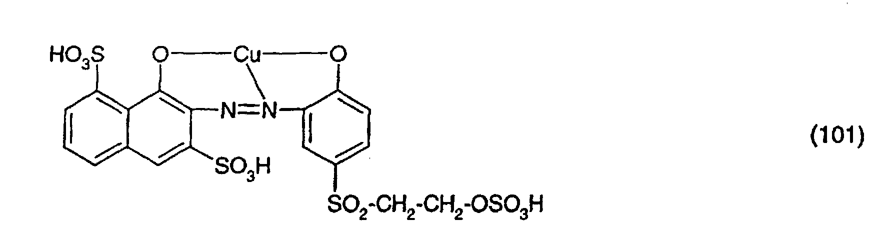 entspricht und Drucke oder Färbungen auf Baumwolle, Wolle, Seide und Papier in einem klaren magenta Farbton mit guter Lichtechtheit und hoher Farbbrillanz ergibt.

### Beispiel 1B:

a) 21 Teile eines Anilinderivats der Formel 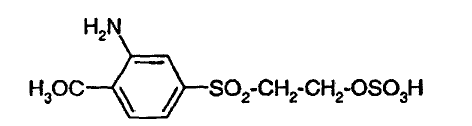 werden in 100 Teile Eiswasser eingetragen und gut verrührt. Zu der erhaltenen Suspension gibt man zunächst 50 Teile einer 31%igen Naphthalinsulfonsäurelösung und tropft dann bei 0 bis 5°C 25 Teile einer 4N Natriumnitritlösung zu. Anschliessend wird bei dieser Temperatur bis zur Beendigung der Reaktion gerührt und der Nitritüberschuss mit Sulfaminsäure zerstört. Die erhaltene saure Suspension der Diazoverbindung wird zu einer Lösung von 42,3 Teilen 1-Naphthol-3,6,8-trisulfonsäure in 250 Teilen Wasser bei 5 bis 10°C gegeben, wobei der pH-Wert der Reaktionsmischung durch Zugabe einer 4N Natriumacetatlösung bei 5 gehalten wird. Zur Vervollständigung der Reaktion wird über Nacht bei Raumtemperatur gerührt. Die erhaltene Lösung wird klärfiltriert, das Produkt ausgesalzen, filtriert und gewaschen. Man erhält 143,4 Teile einer noch feuchten Verbindung, die in Form der freien Säure der Formel 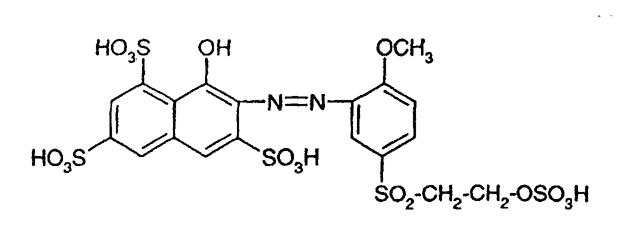 entspricht.
b) Zu einer Lösung der gemäss a) erhaltenen Verbindung in 600 Teilen Wasser werden bei Raumtemperatur 30 Teile CuSO₄ x 5 H₂O gegeben und der pH durch Zugabe von Natriumacetat auf 4,5 gestellt. Die Lösung wird auf 90 bis 95°C erwärmt und zur Vervollständigung der Reaktion einige Stunden unter diesen Bedingungen gerührt. Anschliessend lässt man auf Raumtemperatur abkühlen. Die Reaktionslösung wird klärfiltriert, durch Umkehrosmose vom Salz befreit und gefriergetrocknet. Man erhält 73,7 Teile eines Farbstoffs, der in Form der freien Säure der Formel (102) 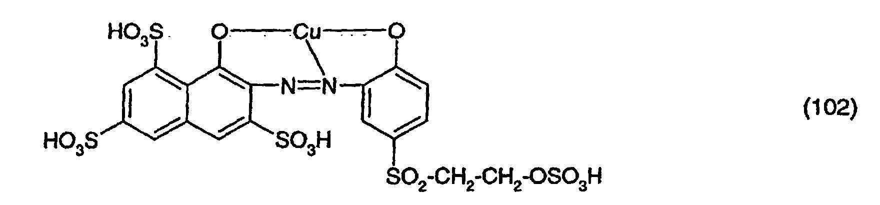 entspricht. Der Farbstoff, bzw. die Tinten enthaltend diesen Farbstoff, ergeben Drucke sowie Färbungen auf Baumwolle, Wolle, Seide und Papier in einem magenta Farbton mit guter Lichtechtheit und hoher Farbbrillanz.

Beispiele 2 bis 19: Analog zu der in Beispiel 1A oder 1B beschriebenen Vorgehensweise lassen sich die Farbstoffe der in Tabelle 1 angegebenen Formeln herstellen, wenn man anstelle des Anilinderivats gemäss Beispiel 1Aa) oder 1Ba) eine äquimolare Menge desjenigen Anilinderivats verwendet, das jeweils den in Tabelle 1 angegebenen Farbstoffen zugrundeliegt:

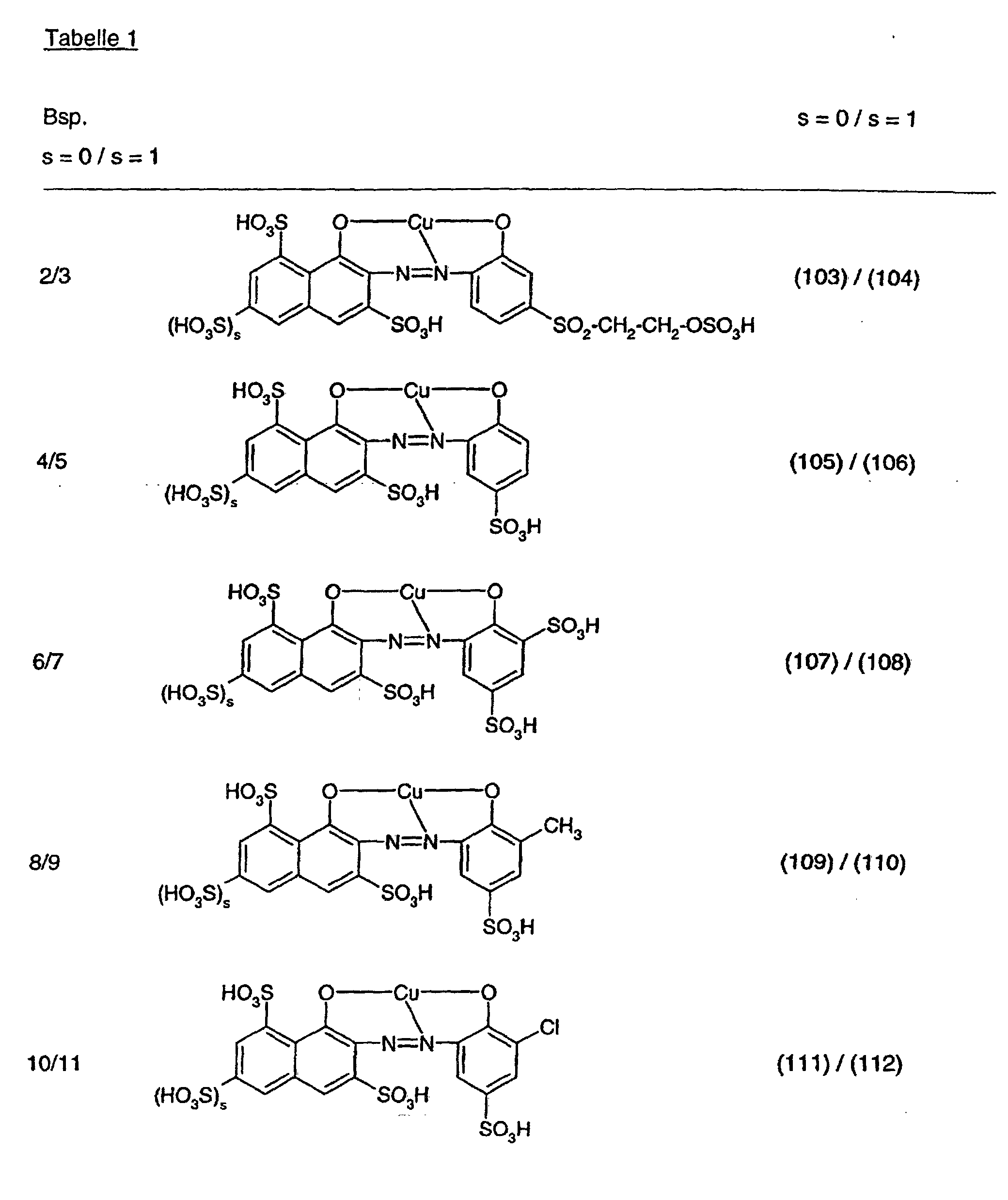

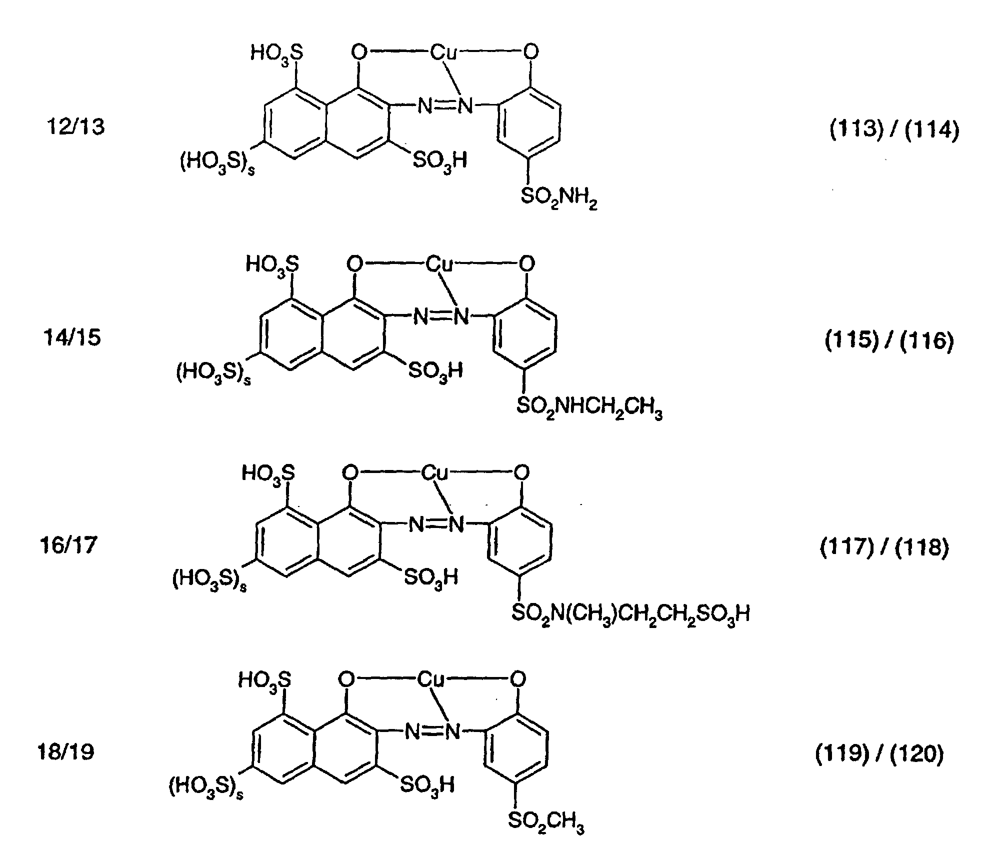

Die Farbstoffe ergeben Drucke sowie Färbungen auf Baumwolle, Wolle, Seide und Papier in einem klaren magenta Farbton mit guter Lichtechtheit und hoher Farbbrillanz.

Beispiel 20: Eine neutrale Lösung von 14,8 Teilen Asparaginsäure in 50 Teilen Wasser wird bei Raumtemperatur zu einer Lösung von 7,5 Teilen des Farbstoffs der Formel (101) gemäss Beispiel 1A in 50 Teilen Wasser gegeben und der pH mit einer 15%igen Natriumhydroxydlösung auf 10 gestellt. Zur Vervollständigung der Reaktion wird einige Stunden unter diesen Bedingungen gerührt (Kontrolle durch Dünnschichtchromatographie). Anschliessend wird die Reaktionsmischung mit einer 16%igen Salzsäure auf pH 8 gestellt, klärfiltriert, dialytisch vom Salz befreit und gefriergetrocknet. Man erhält 5,1 Teile eines Farbstoffs, der in Form der freien Säure der Formel (121) 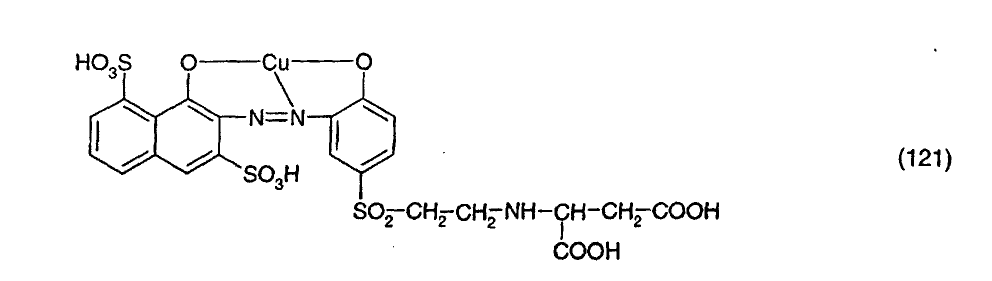 entspricht und Drucke oder Färbungen auf Baumwolle, Wolle, Seide und Papier in einem klaren magenta Farbton mit guter Lichtechtheit und hoher Farbbrillanz ergibt.

Beispiel 21: Eine neutrale Lösung von 14,8 Teilen Asparaginsäure in 50 Teilen Wasser wird bei Raumtemperatur zu einer Lösung von 8,4 Teilen des Farbstoffs der Formel (102) gemäss Beispiel 1B in 50 Teilen Wasser gegeben und der pH mit einer 15%igen Natriumhydroxydlösung auf 10 gestellt. Zur Vervollständigung der Reaktion wird einige Stunden unter diesen Bedingungen gerührt (Kontrolle durch Dünnschichtchromatographie). Anschliessend wird die Reaktionsmischung mit einer 16%igen Salzsäure auf pH 8 gestellt, klärfiltriert, dialytisch vom Salz befreit und gefriergetrocknet. Man erhält 6,0 Teile eines Farbstoffs, der in Form der freien Säure der Formel (122) 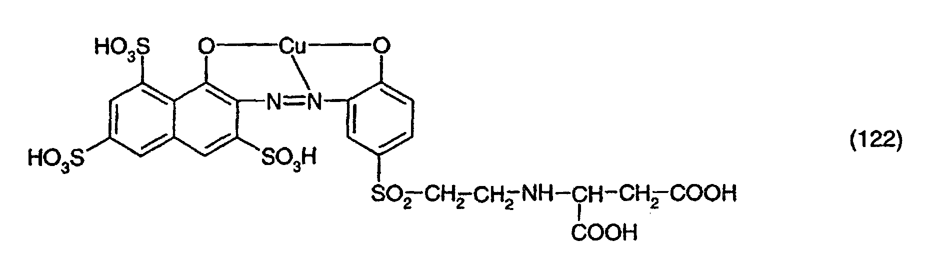 entspricht. Der Farbstoff, bzw. die Tinten enthaltend diesen Farbstoff, ergeben Drucke sowie Färbungen auf Baumwolle, Wolle, Seide und Papier in einem magenta Farbton mit guter Lichtechtheit und hoher Farbbrillanz.

Beispiel 22: 6,7 Teile des Farbstoffs der Formel (101) gemäss Beispiel 1A werden in 100 Teilen Wasser bei Raumtemperatur gelöst und 1,52 Teile N-Methylglycin zugegeben. Der pH der erhaltenen Lösung wird mit einer 15%igen Natriumhydroxydlösung auf 10 gestellt und die Reaktionsmischung auf 50°C erwärmt. Zur Vervollständigung der Reaktion wird etwa eine Stunde unter diesen Bedingungen gerührt (Kontrolle durch Dünnschichtchromatographie). Anschliessend wird die Reaktionsmischung mit einer 16%igen Salzsäure auf pH 8 gestellt, klärfiltriert, dialytisch vom Salz befreit und gefriergetrocknet. Man erhält 6,5 Teile eines Farbstoffs, der in Form der freien Säure der Formel (123) 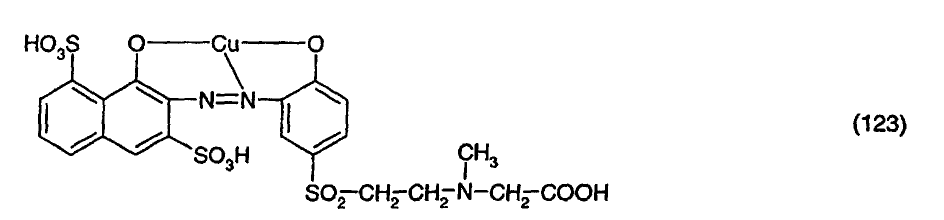 entspricht und Drucke oder Färbungen auf Baumwolle, Wolle, Seide und Papier in einem klaren magenta Farbton mit guter Lichtechtheit und hoher Farbbrillanz ergibt.

Beispiel 23: 7,6 Teile des Farbstoffs der Formel (102) gemäss Beispiel 1 B werden in 100 Teilen Wasser bei Raumtemperatur gelöst und 1,52 Teile N-Methylglycin zugegeben. Der pH der erhaltenen Lösung wird mit einer 15%igen Natriumhydroxydlösung auf 10 gestellt und die Reaktionsmischung auf 50°C erwärmt. Zur Vervollständigung der Reaktion wird etwa eine Stunde unter diesen Bedingungen gerührt (Kontrolle durch Dünnschichtchromatographie). Anschliessend wird die Reaktionsmischung mit einer 16%igen Salzsäure auf pH 8 gestellt, klärfiltriert, dialytisch vom Salz befreit und gefriergetrocknet. Man erhält 6,9 Teile eines Farbstoffs, der in Form der freien Säure der Formel (124) 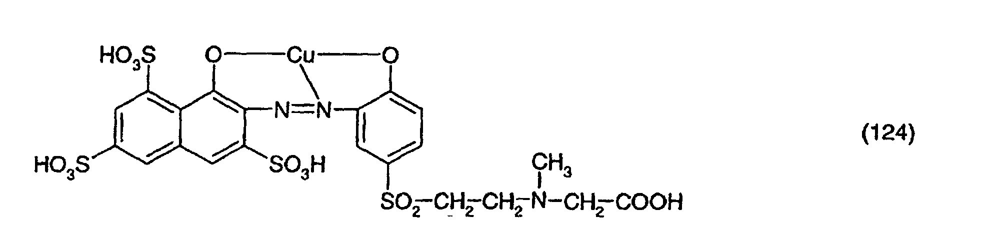 entspricht. Der Farbstoff, bzw. die Tinten enthaltend diesen Farbstoff, ergeben Drucke sowie Färbungen auf Baumwolle, Wolle, Seide und Papier in einem magenta Farbton mit guter Lichtechtheit und hoher Farbbrillanz.

Beispiele 24 bis 111: Analog zu der in den Beispielen 20 bis 23 beschriebenen Vorgehensweise lassen sich die Farbstoffe der allgemeinen Formel 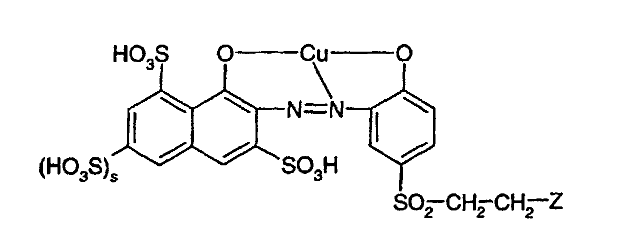 herstellen, worin s 0 oder 1 ist und Z jeweils die in Tabelle 2 genannte Bedeutung hat, wenn man anstelle von Asparaginsäure bzw. N-Methylglycin eine Verbindung der Formel Z-H verwendet:

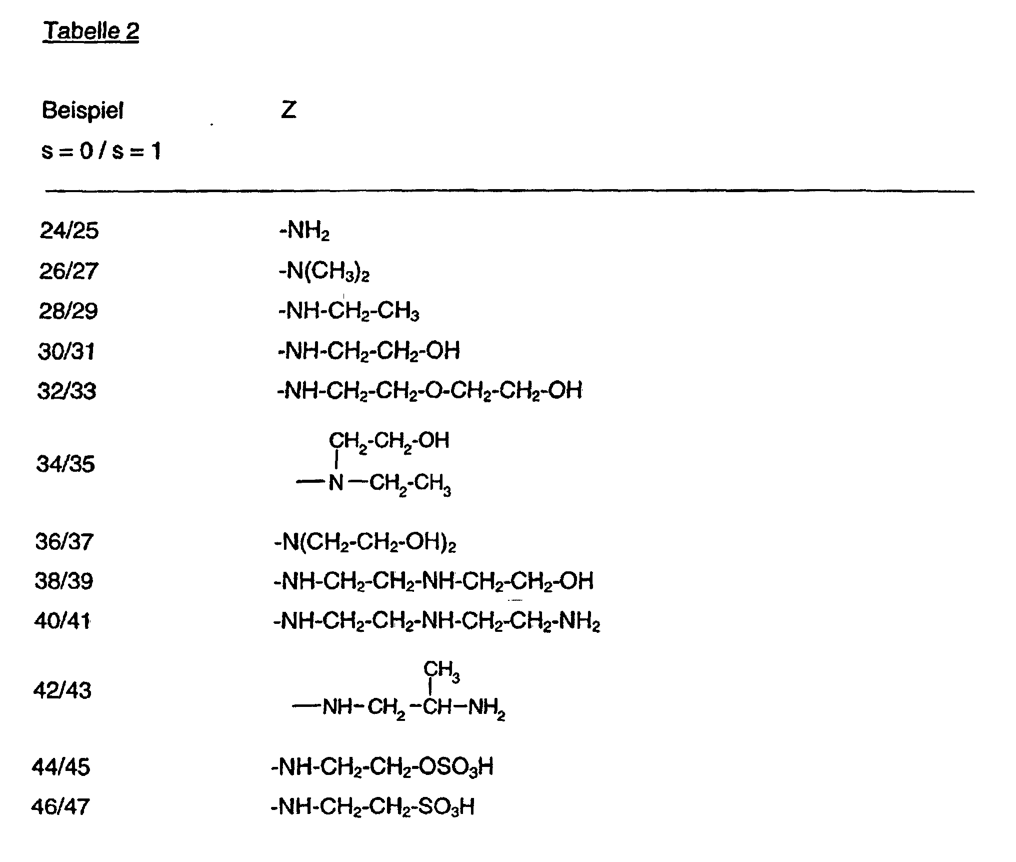

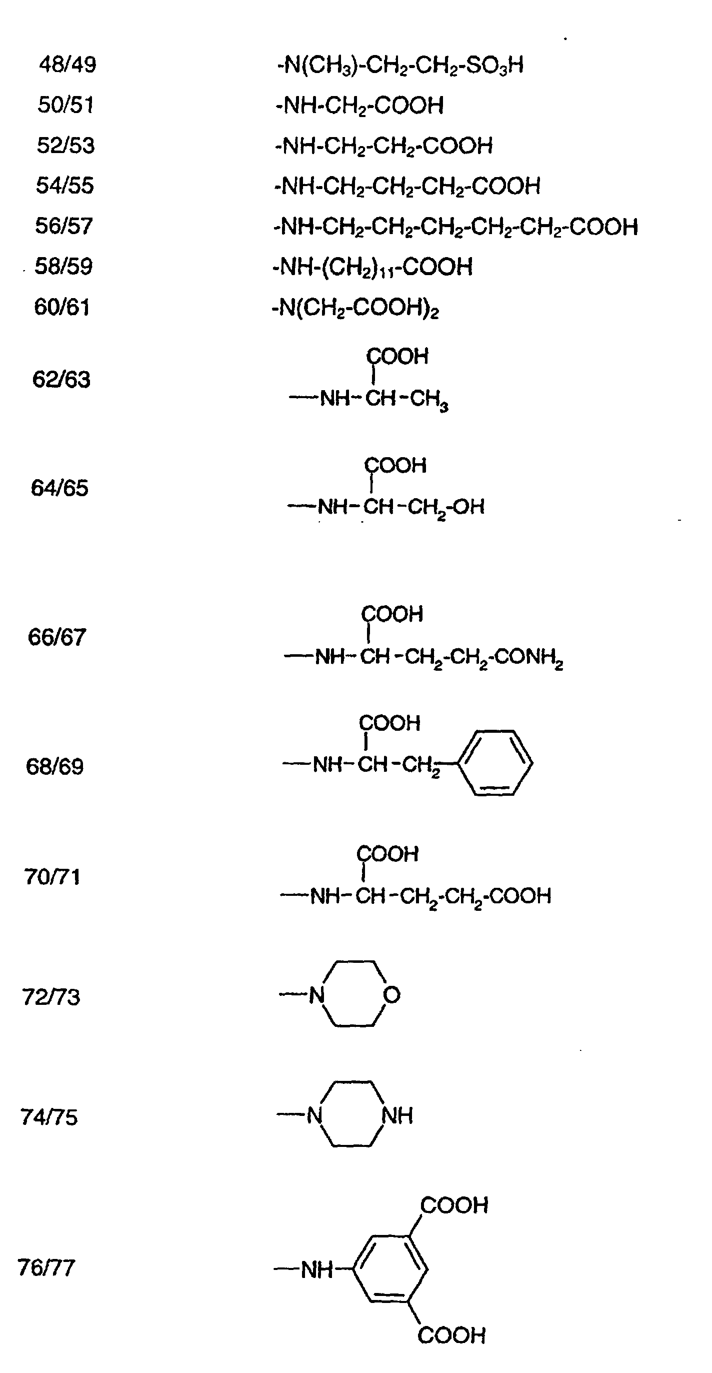

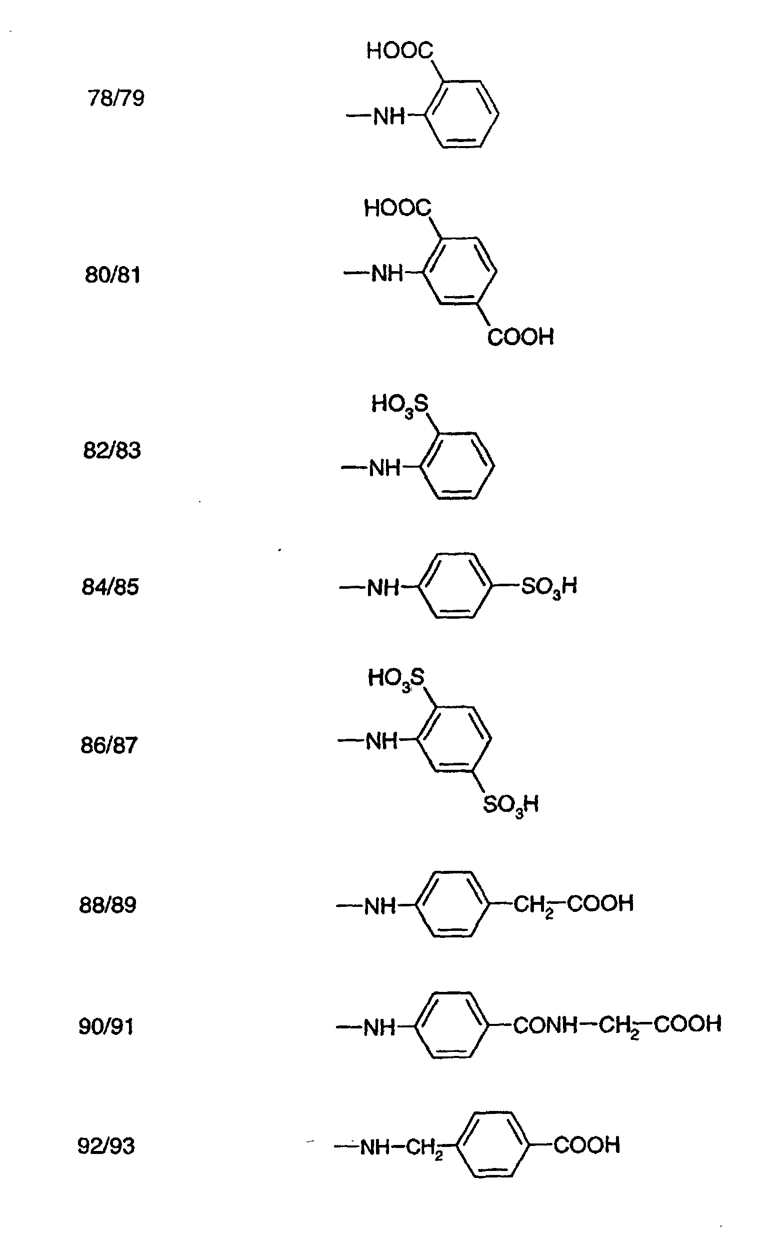

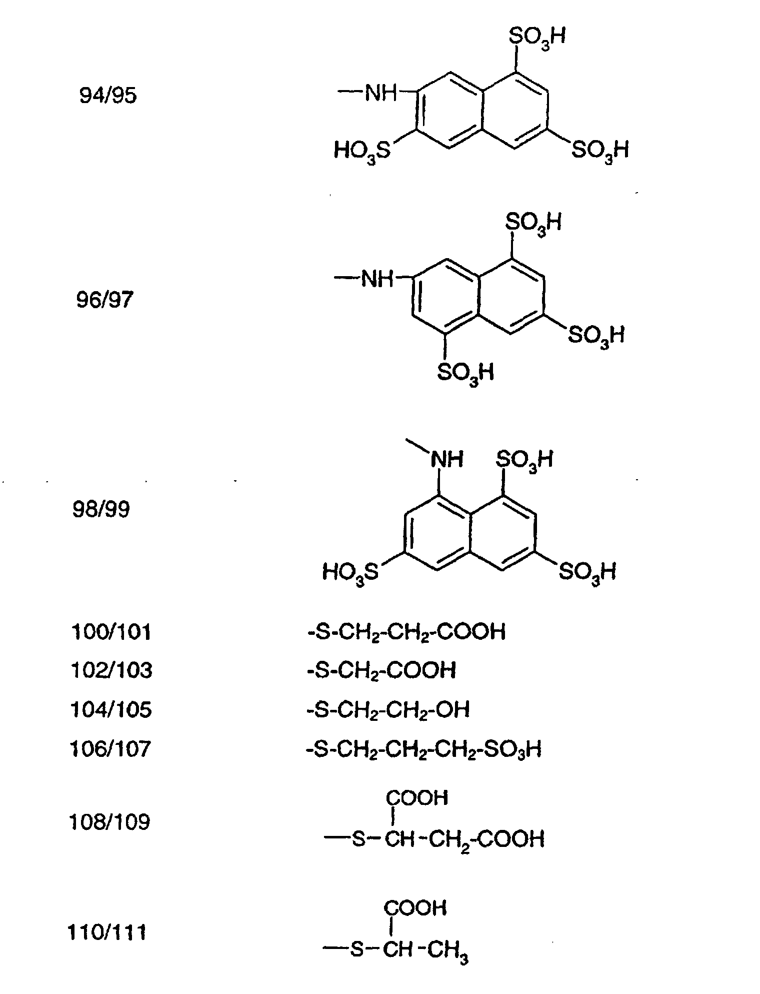

Die Farbstoffe, bzw. die Tinten enthaltend diese Farbstoffe, ergeben Drucke sowie Färbungen auf Baumwolle, Wolle, Seide und Papier in einem magenta Farbton mit guter Lichtechtheit und hoher Farbbrillanz.

Beispiel 112: Eine Lösung von 3,4 Teilen des Farbstoffs der Formel (101) in 100 Teilen Wasser wird durch Zugabe einer 2 N Natriumhydroxidlösung bei pH 10 und einer Temperatur von 0 bis 10°C vinyliert. Zu dieser Lösung werden bei 0 bis 5°C innerhalb einer guten Stunde 27,4 Teile einer wässrigen 0,6 molaren ®Primene 81 R-Lösung getropft und anschliessend die Temperatur sukzessive auf 80°C gesteigert, wobei der pH durch Zugabe einer 2 N Natriumhydroxidlösung bei 10 gehalten wird. Nach Beendigung der Reaktion (Kontrolle mittels Dünnschichtchromatographie) lässt man die Reaktionsmischung zunächst auf Raumtemperatur abkühlen, kühlt dann die Mischung weiter auf ca. 0°C ab und stellt den pH mit einer wässrigen Salzsäure (16%-ig) auf 6,5. Der ausgefallene Niederschlag wird mit Eiswasser gewaschen und anschliessend im Vakuum getrocknet. Man erhält 3,6 Teile eines Farbstoffs, der in der Salzform der Formel (125) 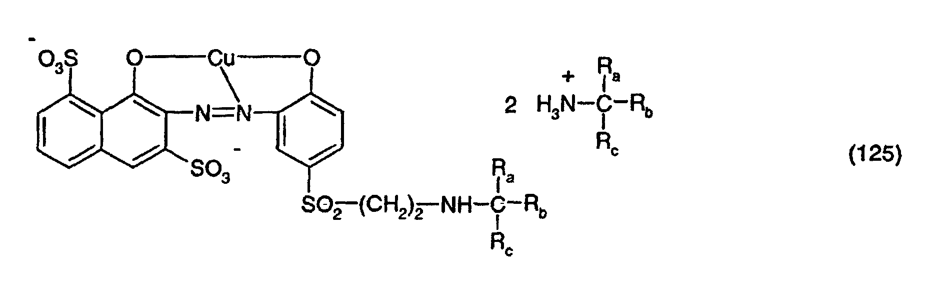 entspricht, worin die Summe der Kohlenstoffatome Rₐ + R_{b} + R_{c} 11 bis 14 beträgt. Der Farbstoff ergibt Drucke auf Aluminium-Blech oder Aluminium-Folie in klarem magenta Farbton mit guter Lichtechtheit und hoher Farbbrillanz.

Beispiel 113: Analog zu der in Beispiel 112 beschriebenen Vorgehensweise lässt sich aus dem Farbstoff der Formel (102) ein Farbstoff erhalten, der in der Salzform der Formel (126) 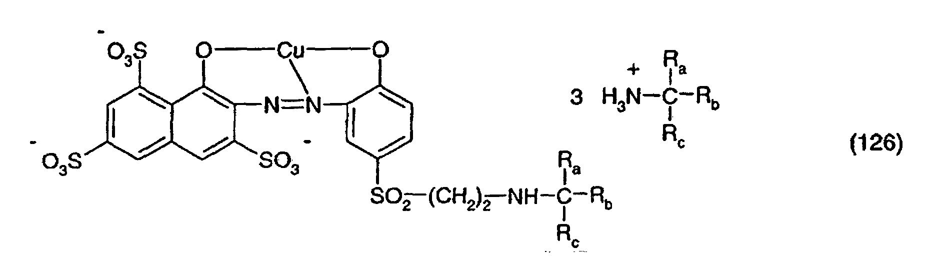 entspricht, worin die Summe der Kohlenstoffatome Rₐ + R_{b} + R_{c} 11 bis 14 beträgt. Der Farbstoff ergibt Drucke auf Aluminium-Blech oder Aluminium-Folie in klarem magenta Farbton mit guter Lichtechtheit und hoher Farbbrillanz.

Beispiel 114: Eine Lösung von 3,4 Teilen des Farbstoffs der Formel (101) in 100 Teilen Wasser wird mit einer 1 N Natriumhydroxidlösung auf pH 4,5 gestellt. Zu dieser Lösung werden bei 0 bis 5°C innerhalb 1,5 Stunden 27,3 Teile einer wässrigen 0,6 molaren ®Primene 81 R-Lösung getropft. Die Reaktionsmischung wird über Nacht bei dieser Temperatur gerührt und anschliessend die flüssigen Anteile von der festen Reaktionsmasse abdekantiert. Der Rückstand wird wiederholt mit Wasser gewaschen, anschliessend in Ethanol gelöst, eingedampft und im Vakuum bei 40 bis 50°C getrocknet. Man erhält 3,3 Teile des Farbstoffs der Formel (101) als Triprimensalz 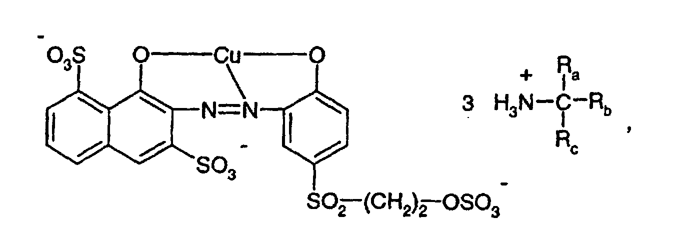 worin die Summe der Kohlenstoffatome Rₐ + R_{b} + R_{c} 11 bis 14 beträgt. Der Farbstoff ergibt Drucke auf Aluminium-Blech oder Aluminium-Folie in klarem magenta Farbton mit guter Lichtechtheit und hoher Farbbrillanz.

Beispiel 115: Analog zu der in Beispiel 114 beschriebenen Vorgehensweise lässt sich aus dem Farbstoff der Formel (102) das Tetraprimensalz erhalten 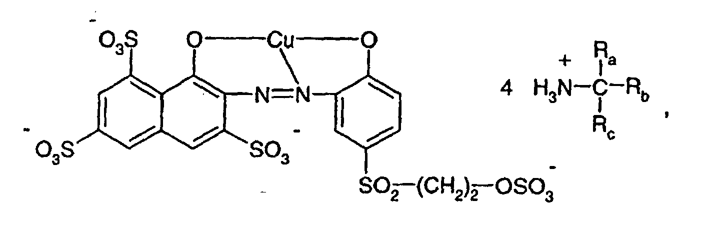 worin die Summe der Kohlenstoffatome Rₐ + R_{b} + R_{c} 11 bis 14 beträgt. Der Farbstoff ergibt Drucke auf Aluminium-Blech oder Aluminium-Folie in klarem magenta Farbton mit guter Lichtechtheit und hoher Farbbrillanz.

Beispiel 116: 1,25 Teile des Farbstoffs der Formel (101) gemäss Beispiel 1A und 1,6 Teile des Farbstoffs der Formel (6a) aus der Beschreibung werden in 100 Teilen destilliertem Wasser gelöst und filtriert. Die so erhaltene Tinte wird mittels eines Drop-on-Demand Ink-Jet Printers auf ein handelsübliches Ink-Jet Papier, Photopapier oder einen Glanzfilm (z.B. Epson Glossy Film) aufgedruckt. Man erhält einen Druck in einem klaren magenta Farbton mit guter Lichtechtheit und hoher Farbbrillanz.

Beispiel 117: 1,25 Teile des Farbstoffs der Formel (101) gemäss Beispiel 1A und 1,6 Teile des Farbstoffs der Formel (7b) aus der Beschreibung werden in 100 Teilen destilliertem Wasser gelöst und filtriert. Die so erhaltene Tinte wird mittels eines Drop-on-Demand Ink-Jet Printers auf ein handelsübliches Ink-Jet Papier, Photopapier oder einen Glanzfilm (z.B. Epson Glossy Film) aufgedruckt. Man erhält einen Druck in einem klaren magenta Farbton mit guter Lichtechtheit und hoher Farbbrillanz.

Beispiel 118: 1,25 Teile des Farbstoffs der Formel (101) gemäss Beispiel 1A und 1,6 Teile des Farbstoffs der Formel (8a) aus der Beschreibung werden in 100 Teilen destilliertem Wasser gelöst und filtriert. Die so erhaltene Tinte wird mittels eines Drop-on-Demand Ink-Jet Printers auf ein handelsübliches Ink-Jet Papier, Photopapier oder einen Glanzfilm (z.B. Epson Glossy Film) aufgedruckt. Man erhält einen Druck in einem klaren magenta Farbton mit guter Lichtechtheit und hoher Farbbrillanz.

Beispiel 119: 2,95 Teile des Farbstoffs der Formel (102) gemäss Beispiel 1B werden in 85 Teilen destilliertem Wasser, 10 Teilen 1,2-Propylenglykol, 1 Teil Glycerin und 1 Teil N-Methylpyrrolidon gelöst und filtriert. Die so erhaltene Tinte wird mittels eines Drop-on-Demand Ink-Jet Printers auf ein handelsübliches Ink-Jet Papier, Photopapier oder einen Glanzfilm (z.B. Epson Glossy Film) aufgedruckt.

Beispiel 120: 1,40 Teile des Farbstoffs der Formel (102) gemäss Beispiel 1 B und 1,6 Teile des Farbstoffs der Formel (6a) aus der Beschreibung werden in 90 Teilen destilliertem Wasser und 10 Teilen 1,2-Propylenglykol gelöst und filtriert. Die so erhaltene Tinte wird mittels eines Drop-on-Demand Ink-Jet Printers auf ein handelsübliches Ink-Jet Papier, Photopapier oder einen Glanzfilm (z.B. Epson Glossy Film) aufgedruckt.

Beispiel 121: 1,40 Teile des Farbstoffs der Formel (102) gemäss Beispiel 1B und 1,6-Teile des Farbstoffs der Formel (7b) aus der Beschreibung werden in 90 Teilen destilliertem Wasser und 10 Teilen 1,2-Propylenglykol gelöst und filtriert. Die so erhaltene Tinte wird mittels eines Drop-on-Demand Ink-Jet Printers auf ein handelsübliches Ink-Jet Papier, Photopapier oder einen Glanzfilm (z.B. Epson Glossy Film) aufgedruckt.

Beispiel 122: 1,40 Teile des Farbstoffs der Formel (102) gemäss Beispiel 1B und 1,6 Teile des Farbstoffs der Formel (8a) aus der Beschreibung werden in 90 Teilen destilliertem Wasser und 10 Teilen 1,2-Propylenglykol gelöst und filtriert. Die so erhaltene Tinte wird mittels eines Drop-on-Demand Ink-Jet Printers auf ein handelsübliches Ink-Jet Papier, Photopapier oder einen Glanzfilm (z.B. Epson Glossy Film) aufgedruckt.

### Applikationsbeispiel 1:

2,85 Teile des Farbstoffs gemäss Beispiel 1A werden in 100 Teilen destilliertem Wasser gelöst und filtriert. Die so erhaltene Tinte wird mittels eines Drop-on-Demand Ink-Jet Printers auf ein handelsübliches Ink-Jet Papier, Photopapier oder einen Glanzfilm (z.B. Epson Glossy Film) aufgedruckt.

### Applikationsbeispiel 2:

a) Ein Seidengewebe wird mit einer wässrigen Flotte, enthaltend 150 g/l eines handelsüblichen Alginatverdickers, 50 g/l Harnstoff und 50 g/l einer wässrigen Ammoniumtartratlösung (25 %-ig), foulardiert (Flottenaufnahme 90%) und getrocknet.
b) Auf das gemäss a) vorbehandelte Seidengewebe wird eine Tinte, enhaltend
   5 Gew.% des Farbstoffs gemäss Beispiel 1A oder 1 B,
   20 Gew.% 1,2-Propylenglykol und
   75 Gew.% Wasser
   mit einem Drop-on-Demand Piezo Inkjet-Kopf aufgedruckt. Der Druck wird getrocknet und bei 102°C im Sattdampf fixiert und anschliessend ausgewaschen.

### Applikationsbeispiel 3:

a) Mercerisiertes Baumwoll-Satin wird mit einer Flotte, enthaltend 30 g/l Natriumcarbonat, foulardiert (Flottenaufnahme 70%) und getrocknet.
b) Auf das gemäss Schritt a) vorbehandelte Baumwoll-Satin wird eine Tinte mit einer Viskosität von 2 mPa.s, enthaltend
   - 15 Gew.-% des Farbstoffs gemäss Beispiel 1 A oder 1 B,
   - 15 Gew.-% 1,2-Propylenglykol,
   - 0,5 Gew.-% Borax und
   - 69,5 Gew.-% Wasser
   mit einem Drop-on-Demand Inkjet-Kopf (Bubble Jet) aufgedruckt. Der Druck wird vollständig getrocknet und 4 Minuten bei 102°C im Sattdampf fixiert, kalt gespült, kochend ausgewaschen, nochmals gespült und getrocknet.

### Applikationsbeispiel 4:

a) Eine Drucktinte wird hergestellt aus:
   8 Gew.% des Farbstoffs gemäss Beispiel 112 oder 113,
   8 Gew.% Nitrocellulose A 400,
   6 Gew.% Keton Resin SK,
   1 Gew.% Dibutylphthalat,
   20 Gew.% 1-Methoxypropanol,
   20 Gew.% Methylisobutylketon und
   37 Gew.% Ethanol (abs.), indem man die Lösungsmittel miteinander mischt, dann die Harze und zuletzt den Farbstoff darin löst. Die Drucktinte wird mit einer Schablone auf vinyllackiertes Aluminium-Blech oder Aluminium-Folie gedruckt.

### Applikationsbeispiel 5:

10 Teile Wollstrickgarn werden bei 30°C in ein Färbebad eingerührt, das auf 100 Teile Wasser 0.8 Teile des Farbstoffs gemäss Beispiel 1A oder 5, 0.5 Teile Natriumsulfat und 2 Teile Natriumacetat enthält und mit Essigsäure (80%) auf einen pH-Wert von 4,5 gestellt ist. Die Flotte wird im Verlauf von 45 Minuten zum Sieden gebracht und während weiteren 45 bis 70 Minuten bei Kochtemperatur gehalten. Daraufhin wird das Färbegut herausgenommen, mit kaltem Wasser gründlich gespült und getrocknet.

### Applikationsbeispiel 6:

2 Teile des Farbstoffs gemäss Beispiel 1A werden in 400 Teilen Wasser gelöst; dazu gibt man 1500 Teile einer Lösung, die pro Liter 51 g Natriumchlorid enthält. In dieses Färbebad geht man bei 60°C mit 100 Teilen Baumwollgewebe ein. Nach 45 Minuten bei 60°C werden 100 Teile einer Lösung, die pro Liter 16 g Natriumhydroxid und 20 g kalziniertes Soda enthält, zugegeben. Man färbt weitere 45 Minuten bei dieser Temperatur. Danach wird die gefärbte Ware gespült, während einer Viertelstunde mit einem nichtionogenen Waschmittel kochend geseift, nochmals gespült und getrocknet.

### Applikationsbeispiel 7:

3 Teile des gemäss Beispiel 1A erhaltenen Farbstoffs werden unter schnellem Rühren in 100 Teile einer Stammverdickung, enthaltend 50 Teile 5 %-ige Natriumalginat-verdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Tinten, enthaltend
einen Farbstoff der Formel (1) 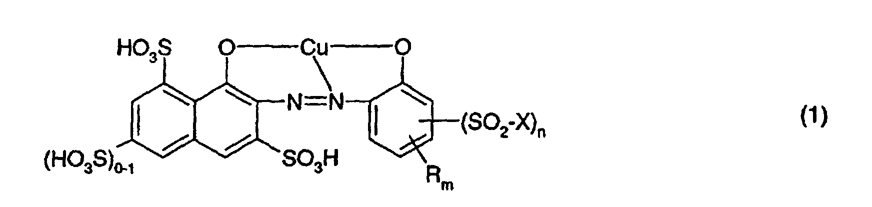 worin
X Hydroxy; gegebenenfalls durch Hydroxy substituiertes C₁-C₄-Alkyl; Vinyl oder einen Rest -CH₂-CH₂-Z bedeutet, wobei Z eine alkalisch abspaltbare Gruppe oder gegebenenfalls im Alkylteil substituiertes und/oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes und/oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstituiertes C₁-C₄-Alkyl bedeutet, C₁₀-C₂₀-Terpenamino, gegebenenfalls im Cycloalkylring substituiertes C₅-C₇-Cycloalkyl-amino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl ist; oder X die Bedeutung von Z mit Ausnahme einer alkalisch abspaltbaren Gruppe hat;
R C₁-C₄-Alkyl, C₁-C₄-Alkoxy oder Halogen bedeutet; und
m und n unabhängig voneinander die Zahl 0, 1 oder 2 sind; und
ein organisches Lösungsmittel.

2. Tinten gemäss Anspruch 1, **dadurch gekennzeichnet, dass**
R C₁-C₄-Alkyl oder Halogen bedeutet.

3. Tinten gemäss einem der Ansprüche 1 und 2, **dadurch gekennzeichnet, dass**
Z -OSO₃H, -Cl, gegebenenfalls im Alkylteil durch Hydroxy, Sulfo oder Carboxy substituiertes und/oder durch ein, zwei oder drei Sauerstoffatome unterbrochenes C₁-C₁₂-Alkoxy, gegebenenfalls im Alkylteil durch Hydroxy, Sulfo oder Carboxy substituiertes C₁-C₄-Alkylthio, Amino, gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes und/oder durch ein, zwei oder drei Sauerstoffatome oder -NR₁- Gruppen unterbrochenes N-Mono- oder N,N-Di-C₁-C₁₄-Alkylamino, wobei R₁ Wasserstoff oder gegebenenfalls durch Amino substituiertes C₁-C₄-Alkyl bedeutet, C₂₀-Diterpenamino, gegebenenfalls durch C₁-C₄-Alkyl oder Carboxyl substituiertes C₅-C₇-Cycloalkylamino, gegebenenfalls durch Carboxymethyl, C₁-C₄-Alkoxy, Carboxy, Carbamoyl, N-C₁-C₄-Alkylcarbamoyl, welches seinerseits im Alkylteil durch Carboxy weitersubstituiert sein kann, Sulfo oder Halogen substituiertes Phenylamino oder N-C₁-C₄-Alkyl-N-phenylamino, im Arylteil durch Sulfo substituiertes Naphthylamino, Morpholino, gegebenenfalls am Stickstoff durch 2-Aminoethyl oder 3-Aminopropyl substituiertes Piperazin-1-yl oder Piperidin-1-yl bedeutet.

4. Tinten gemäss einem der Ansprüche 1 bis 3, **dadurch gekennzeichnet, dass** Z -OSO₃H, gegebenenfalls im Alkylteil durch Hydroxy, Sulfo oder Carboxy substituiertes C₁-C₄-Alkylthio, Amino, gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes und/oder durch ein, zwei oder drei Sauerstoffatome oder -NH- Gruppen unterbrochenes N-Mono- oder N,N-Di-C₁-C₁₄-Alkylamino, C₂₀-Diterpenamino, gegebenenfalls durch Carboxymethyl, C₁-C₄-Alkoxy, Carboxy, Carbamoyl, N-C₁-C₄-Alkylcarbamoyl, welches seinerseits im Alkylteil durch Carboxy weitersubstituiert sein kann, Sulfo oder Halogen substituiertes Phenylamino oder N-C₁-C₄-Alkyl-N-phenylamino, im Arylteil durch Sulfo substituiertes Naphthylamino, Morpholino, gegebenenfalls am Stickstoff durch 2-Aminoethyl substituiertes Piperazin-1-yl oder Piperidin-1-yl bedeutet.

5. Tinten gemäss einem der Ansprüche 1 bis 4, **dadurch gekennzeichnet, dass** Z -OSO₃H, gegebenenfalls im Alkylteil durch Hydroxy, Sulfo oder Carboxy substituiertes C₁-C₄-Alkylthio, Amino, gegebenenfalls im Alkylteil durch Phenyl, welches seinerseits durch Carboxy substituiert sein kann, Amino, Hydroxy, Sulfo, Sulfato, Carboxy oder Carbamoyl substituiertes und/oder durch ein oder zwei Sauerstoffatome oder -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder gegebenenfalls am Stickstoff durch 2-Aminoethyl substituiertes Piperazin-1-yl bedeutet.

6. Tinten gemäss einem der Ansprüche 1 bis 5, **dadurch gekennzeichnet, dass**
X für Hydroxy; einen Rest -CH₂-CH₂-Z, worin Z -OSO₃H, gegebenenfalls im Alkylteil durch Hydroxy, Sulfo oder Carboxy substituiertes C₁-C₄-Alkylthio, Amino, gegebenenfalls im Alkylteil durch Phenyl, welches seinerseits durch Carboxy substituiert sein kann, Amino, Hydroxy, Sulfo, Sulfato, Carboxy oder Carbamoyl substituiertes und/oder durch ein oder zwei Sauerstoffatome oder -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder gegebenenfalls am Stickstoff durch 2-Aminoethyl substituiertes Piperazin-1-yl bedeutet; oder
X für Amino, gegebenenfalls im Alkylteil durch Phenyl, welches seinerseits durch Carboxy substituiert sein kann, Hydroxy, Sulfo, Sulfato oder Carboxy substituiertes N-Mono-C₁-C₄-Alkylamino, gegebenenfalls im Alkylteil durch Hydroxy, Sulfo oder Carboxy substituiertes N,N-Di-C₁-C₄-Alkylamino, Morpholino oder gegebenenfalls am Stickstoff durch 2-Aminoethyl substituiertes Piperazin-1-yl, steht.

7. Tinten gemäss einem der Ansprüche 1 bis 6, **dadurch gekennzeichnet, dass**
m die Zahl 0 oder 1 ist und
n die Zahl 1 oder 2 bedeutet.

8. Tinten gemäss einem der Ansprüche 1 bis 7, **dadurch gekennzeichnet, dass** der Farbstoff der Formel (1) ein Farbstoff der Formel (2) 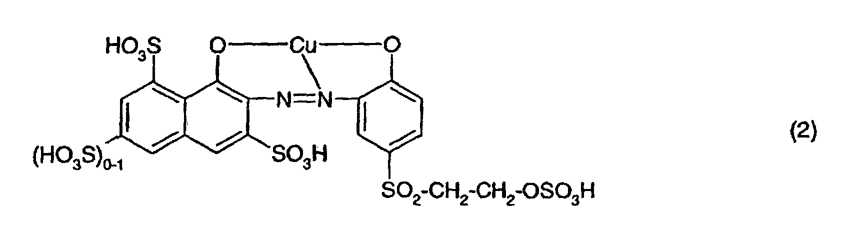 ist.

9. Verfahren zum Bedrucken von Papier, textilen Fasermaterialien, Kunststoff- oder Aluminium-Folien nach dem Tintenstrahldruck-Verfahren, **dadurch gekennzeichnet, dass** man eine Tinte gemäss Anspruch 1 verwendet.

10. Farbstoffe der Formel (1a) 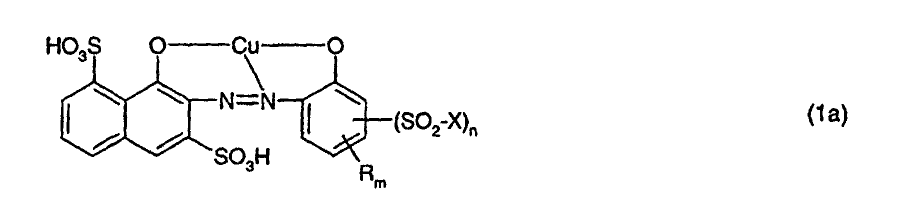 worin
X Hydroxy; gegebenenfalls durch Hydroxy substituiertes C₁-C₄-Alkyl; Vinyl oder einen Rest -CH₂-CH₂-Z bedeutet, wobei Z eine alkalisch abspaltbare Gruppe oder gegebenenfalls im Alkylteil substituiertes und/oder durch Sauerstoff unterbrochenes C₁-C₂₄-ALkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes und/oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstitu-iertes C₁-C₄-Alkyl bedeutet, C₁₀-C₂₀-Terpenamino, gegebenenfalls im Cycloalkylring substituiertes C₅-C₇-Cycloalkylamino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl ist; oder X die Bedeutung von Z mit Ausnahme einer alkalisch abspaltbaren Gruppe hat;
R C₁-C₄-Alkyl, C₁-C₄-Alkoxy oder Halogen bedeutet; und
m und n unabhängig voneinander die Zahl 0, oder 2 sind.

11. Farbstoffe der Formel (1 b) 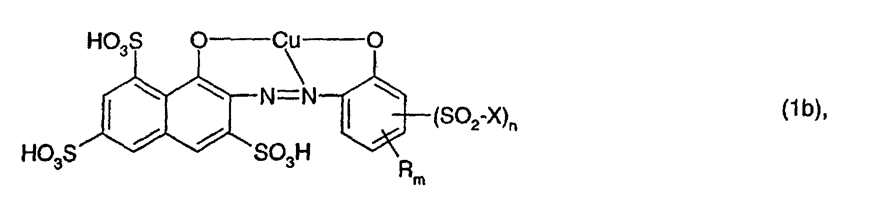 worin
X Hydroxy; gegebenenfalls durch Hydroxy substituiertes C₁-C₄-Alkyl; oder einen Rest -CH₂-CH₂-Z bedeutet, wobei Z gegebenenfalls im Alkylteil substituiertes und/oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes und/oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstituiertes C₁-C₄-Alkyl bedeutet, C₁₀-C₂₀-Terpenamino, gegebenenfalls im Cycloalkylring substituiertes C₅-C₇-Cycloalkylamino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl ist; oder X die Bedeutung von Z hat;
R C₁-C₄-Alkyl, C₁-C₄-Alkoxy oder Halogen bedeutet; und
m und n unabhängig voneinander die Zahl 0, 1 oder 2 sind.

12. Verfahren zur Herstellung von Farbstoffen gemäss einem der Ansprüche 10 und 11, **dadurch gekennzeichnet, dass** man eine Verbindung der Formel (3) 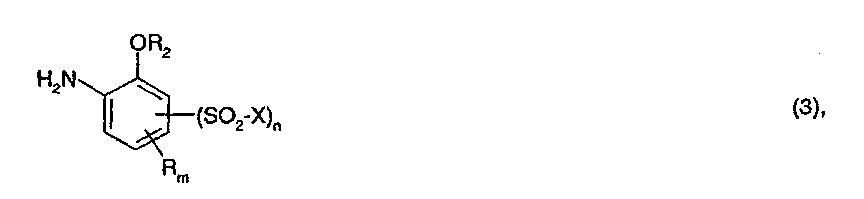 diazotiert, die erhaltene Diazoverbindung auf die Verbindung der Formel (4) 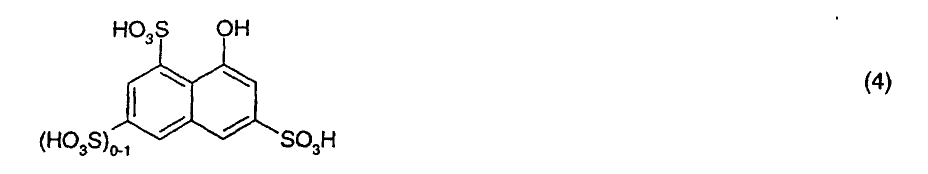 kuppelt und den entstandenen Azofarbstoff mit kupferabgebenden Mitteln kupfert, wobei R₂ für Wasserstoff oder C₁-C₄-Alkyl steht und für R, X, m und n die in Anspruch 10 oder 11 angegebenen Bedeutungen gelten; oder
eine Verbindung der Formel (3), worin X Vinyl oder -CH₂-CH₂-Z und Z eine alkalisch abspaltbare Gruppe bedeutet, diazotiert, die erhaltene Diazoverbindung auf die Verbindung der Formel (4) kuppelt, den entstandenen Azofarbstoff mit kupferabgebenden Mitteln kupfert und den erhaltenen Kupferkomplexazofarbstoff gegebenenfalls mit mindestens einer äquimolaren Menge einer Verbindung der Formel (5)
Z-H (5)
umsetzt, wobei für Z die in Anspruch 11 angegebenen Bedeutungen gelten.

13. Verwendung von Farbstoffen gemäss einem der Ansprüche 10 und 11 bzw. der gemäss Anspruch 12 erhaltenen Farbstoffe zum Färben oder Bedrucken von textilen Fasermaterialien, Holz, Papier, Aluminium-Blechen oder Aluminium-Folien.

14. Farbstoffmischungen, enthaltend
einen Farbstoff der Formel (1) 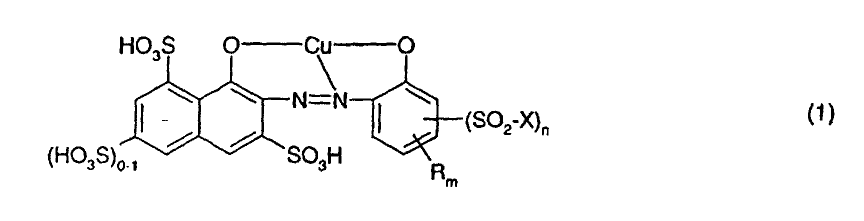 worin
X Hydroxy; gegebenenfalls durch Hydroxy substituiertes C₁-C₄-Alkyl; Vinyl oder einen Rest -CH₂-CH₂-Z bedeutet, wobei Z eine alkalisch abspaltbare Gruppe oder gegebenenfalls im Alkylteil substituiertes und/oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes und/oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstituiertes C₁-C₄-Alkyl bedeutet, C₁₀-C₂₀-Terpenamino, gegebenenfalls im Cycloalkylring substituiertes C₅-C₇-Cycloalkyl-amino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl ist; oder X die Bedeutung von Z mit Ausnahme einer alkalisch abspaltbaren Gruppe hat;
R C₁-C₄-Alkyl, C₁-C₄-Alkoxy oder Halogen bedeutet; und
m und n unabhängig voneinander die Zahl 0, oder 2 sind;
zusammen mit mindestens einem Farbstoff aus der Gruppe
Xanthenfarbstoffe der Formel (6) 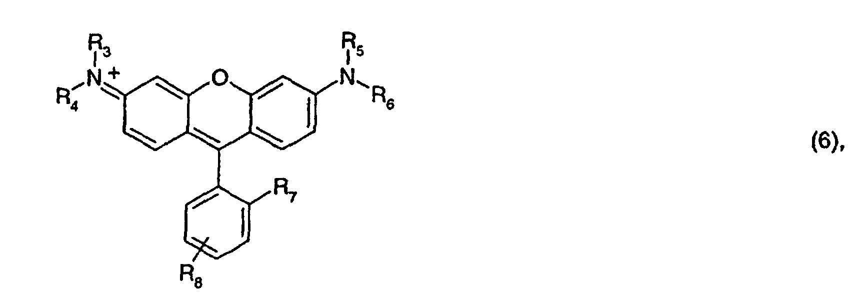 Azofarbstoffe der Formel (7) 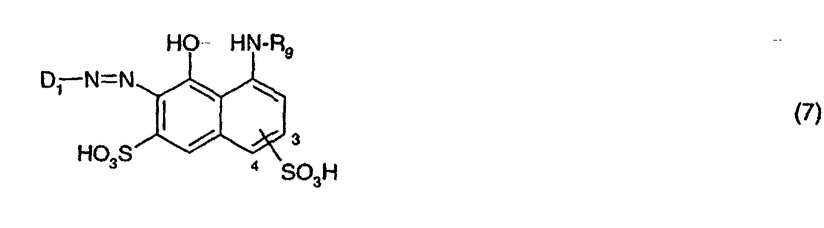 und
Azofarbstoffe der Formel (8) 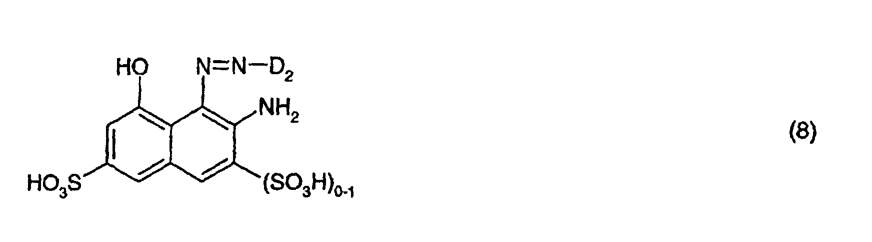 enthalten, worin
D₁ und D₂ unabhängig voneinander den Rest einer Diazokomponente der Benzol- oder Naphthalinreihe bedeuten,
R₃, R₄, R₅ und R₆ unabhängig voneinander C₁-C₄-Alkyl oder gegebenenfalls substituiertes C₅-C₇-Cycloalkyl sind,
R₇ und R₈ unabhängig voneinander für Sulfo oder Carboxy stehen, und
R₉ Wasserstoff oder ein Acylrest ist.

15. Farbstoffe der Formel (1) 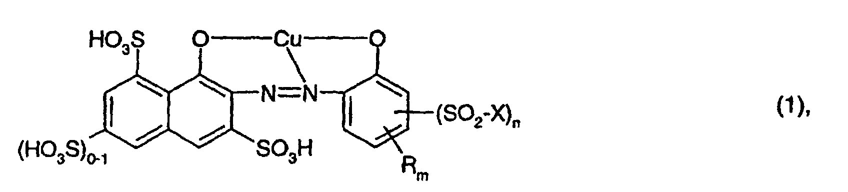 worin
X Hydroxy; gegebenenfalls durch Hydroxy substituiertes C₁-C₄-Alkyl; Vinyl oder einen Rest -CH₂-CH₂-Z bedeutet, wobei Z eine alkalisch abspaltbare Gruppe oder gegebenenfalls im Alkylteil substituiertes und/oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes und/oder durch Sauerstoff oder einen Rest -NR₁- unterbrochenes N-Mono- oder N,N-Di-C₁-C₂₄-Alkylamino, wobei R₁ Wasserstoff oder gegebenenfalls weitersubstituiertes C₁-C₄-Alkyl bedeutet, C₁₀-C₂₀-Terpenamino, gegebenenfalls im Cycloalkylring substituiertes C₅-C₇-Cycloalkyl-amino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, gegebenenfalls am Stickstoff substituiertes Piperazin-1-yl oder Piperidin-1-yl ist; oder X die Bedeutung von Z mit Ausnahme einer alkalisch abspaltbaren Gruppe hat;
R C₁-C₄-Alkyl, C₁-C₄-Alkoxy oder Halogen bedeutet; und
m und n unabhängig voneinander die Zahl 0, 1 oder 2 sind;
als Salz eines Amins der Formel 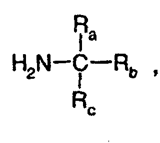 wobei die Summe der Kohlenstoffatome Rₐ + R_{b} + R_{c} 11 bis 14 beträgt.

## Claims

1. An ink comprising
a dye of formula (1) 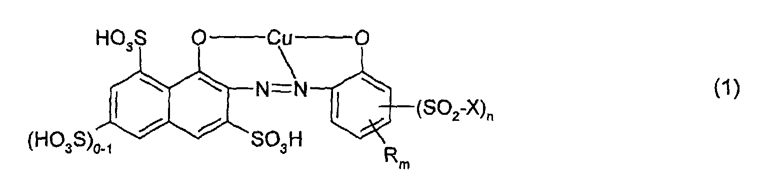 wherein
X is hydroxy, unsubstituted or hydroxy-substituted C₁-C₄alkyl, vinyl or a radical -CH₂-CH₂-Z, wherein Z is a group removable under alkaline conditions or is C₁-C₂₄alkoxy unsubstituted or substituted in the alkyl moiety, which may further be interrupted in the alkyl moiety by oxygen; phenoxy unsubstituted or substituted in the phenyl ring; C₁-C₄alkylthio unsubstituted or substituted in the alkyl moiety; phenylthio unsubstituted or substituted in the phenyl ring; amino; N-mono- or N,N-di-C₁-C₂₄alkylamino unsubstituted or substituted in the alkyl moiety, which may further be interrupted in the alkyl moiety by oxygen or by a radical -NR₁- in which R₁ is hydrogen or unsubstituted or further substituted C₁-C₄alkyl; C₁₀-C₂₀terpeneamino;
C₅-C₇cycloalkylamino unsubstituted or substituted in the cycloalkyl ring; phenyl- or naphthylamino or N-C₁-C₄alkyl-N-phenyl- or N-C₁-C₄ₐlkyl-N-naphthyl-amino unsubstituted or substituted in the aryl moiety; morpholino; piperidin-1-yl; or piperazin-1-yl unsubstituted or substituted at the nitrogen atom;
or X has the same definitions as Z with the exception of a group removable under alkaline conditions;
R is C₁-C₄alkyl, C₁-C₄alkoxy or halogen; and
m and n are each independently of the other the number 0, 1 or 2; and
an organic solvent.

2. An ink according to claim 1, wherein
R is C₁-C₄alkyl or halogen.

3. An ink according to either claim 1 or claim 2, wherein
Z is -OSO₃H; -Cl; C₁-C₁₂alkoxy unsubstituted or substituted in the alkyl moiety by hydroxy, sulfo or by carboxy, which may further be interrupted in the alkyl moiety by one, two or three oxygen atoms; C₁-C₄alkylthio unsubstituted or substituted in the alkyl moiety by hydroxy, sulfo or by carboxy; amino; N-mono- or N,N-di-C₁-C₁₄alkylamino unsubstituted or substituted in the alkyl moiety by phenyl (which may itself be substituted by carboxy, carbamoyl, sulfo or by sulfamoyl), amino, C₂-C₄alkanoylamino, hydroxy, sulfo, sulfato, carboxy, carbamoyl or by sulfamoyl, which may further be interrupted in the alkyl moiety by one, two or three oxygen atoms or -NR₁- groups in which R₁ is hydrogen or unsubstituted or amino-substituted C₁-C₄alkyl; C₂₀diterpeneamino; C₅-C₇cycloalkylamino unsubstituted or substituted by C₁-C₄alkyl or by carboxy; phenylamino or N-C₁-C₄alkyl-N-phenylamino unsubstituted or substituted by carboxymethyl, C₁-C₄alkoxy, carboxy, carbamoyl, N-C₁-C₄alkylcarbamoyl (which may itself be further substituted in the alkyl moiety by carboxy), sulfo or by halogen;
naphthylamino substituted in the aryl moiety by sulfo; morpholino; piperidin-1-yl; or piperazin-1-yl unsubstituted or substituted at the nitrogen atom by 2-aminoethyl or 3-aminopropyl.

4. An ink according to any one of claims 1 to 3, wherein
Z is -OSO₃H; C₁-C₄alkylthio unsubstituted or substituted in the alkyl moiety by hydroxy, sulfo or by carboxy; amino; N-mono- or N,N-di-C₁-C₁₄alkylamino unsubstituted or substituted in the alkyl moiety by phenyl (which may itself be substituted by carboxy, carbamoyl, sulfo or by sulfamoyl), amino, C₂-C₄alkanoylamino, hydroxy, sulfo, sulfato, carboxy, carbamoyl or by sulfamoyl, which may further be interrupted in the alkyl moiety by one, two or three oxygen atoms or -NH- groups; C₂₀diterpeneamino; phenylamino or N-C₁-C₄alkyl-N-phenylamino unsubstituted or substituted by carboxymethyl, C₁-C₄alkoxy, carboxy, carbamoyl, N-C₁-C₄alkylcarbamoyl (which may itself be further substituted in the alkyl moiety by carboxy), sulfo or by halogen; naphthylamino substituted in the aryl moiety by sulfo; morpholino;
piperidin-1-yl; or piperazin-1-yl unsubstituted or substituted at the nitrogen atom by 2-aminoethyl.

5. An ink according to any one of claims 1 to 4, wherein
Z is -OSO₃H; C₁-C₄alkylthio unsubstituted or substituted in the alkyl moiety by hydroxy, sulfo or by carboxy; amino; N-mono-C₁-C₆alkylamino unsubstituted or substituted in the alkyl moiety by phenyl (which may itself be substituted by carboxy), amino, hydroxy, sulfo, sulfato, carboxy or by carbamoyl, which may further be interrupted in the alkyl moiety by one or two oxygen atoms or -NH- groups; N,N-di-C₁-C₆alkylamino unsubstituted or substituted in the alkyl moiety by amino, hydroxy, sulfo, sulfato, carboxy or by carbamoyl; morpholino; or
piperazin-1-yl unsubstituted or substituted at the nitrogen atom by 2-aminoethyl.

6. An ink according to any one of claims 1 to 5, wherein
X is hydroxy or a radical -CH₂-CH₂-Z, wherein Z is -OSO₃H; C₁-C₄alkyithio unsubstituted or substituted in the alkyl moiety by hydroxy, sulfo or by carboxy; amino; N-mono-C₁-C₆alkylamino unsubstituted or substituted in the alkyl moiety by phenyl (which may itself be substituted by carboxy), amino, hydroxy, sulfo, sulfato, carboxy or by carbamoyl, which may further be interrupted in the alkyl moiety by one or two oxygen atoms or -NH- groups; N,N-di-C₁-C₆alkylamino unsubstituted or substituted in the alkyl moiety by amino, hydroxy, sulfo, sulfato, carboxy or by carbamoyl; morpholino; or piperazin-1-yl unsubstituted or substituted at the nitrogen atom by 2-aminoethyl;
or X is amino; N-mono-C₁-C₄alkylamino unsubstituted or substituted in the alkyl moiety by phenyl (which may itself be substituted by carboxy), hydroxy, sulfo, sulfato or by carboxy;
N,N-di-C₁-C₄alkylamino unsubstituted or substituted in the alkyl moiety by hydroxy, sulfo or by carboxy; morpholino; or piperazin-1-yl unsubstituted or substituted at the nitrogen atom by 2-aminoethyl.

7. An ink according to any one of claims 1 to 6, wherein
m is the number 0 or 1 and
n is the number 1 or 2.

8. An ink according to any one of claims 1 to 7, wherein
the dye of formula (1) is a dye of formula (2)

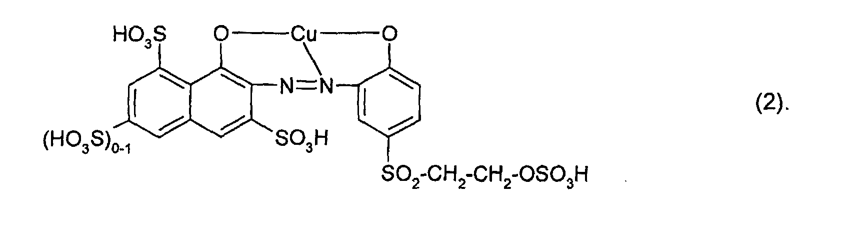

9. A method of printing paper, textile fibre materials, plastics films or aluminium foils in accordance with the ink-jet printing method, which comprises using an ink according to claim 1.

10. A dye of formula (1a) 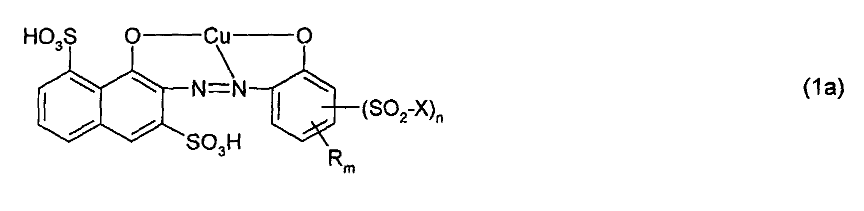 wherein
X is hydroxy, unsubstituted or hydroxy-substituted C₁-C₄alkyl, vinyl or a radical -CH₂-CH₂-Z, wherein Z is a group removable under alkaline conditions or is C₁-C₂₄alkoxy unsubstituted or substituted in the alkyl moiety, which may further be interrupted in the alkyl moiety by oxygen; phenoxy unsubstituted or substituted in the phenyl ring; C₁-C₄alkylthio unsubstituted or substituted in the alkyl moiety; phenylthio unsubstituted or substituted in the phenyl ring; amino; N-mono- or N,N-di-C₁-C₂₄alkylamino unsubstituted or substituted in the alkyl moiety, which may further be interrupted in the alkyl moiety by oxygen or by a radical -NR₁- in which R₁ is hydrogen or unsubstituted or further substituted C₁-C₄alkyl; C₁₀-C₂₀terpeneamino; C₅-C₇cycloalkylamino unsubstituted or substituted in the cycloalkyl ring; phenyl- or naphthylamino or N-C₁-C₄alkyl-N-phenyl- or N-C₁-C₄alkyl-N-naphthyl-amino unsubstituted or substituted in the aryl moiety; morpholino; piperidin-1-yl; or piperazin-1-yl unsubstituted or substituted at the nitrogen atom;
or X has the same definitions as Z with the exception of a group removable under alkaline conditions;
R is C₁-C₄alkyl, C₁-C₄alkoxy or halogen; and
m and n are each independently of the other the number 0, 1 or 2.

11. A dye of formula (1b) 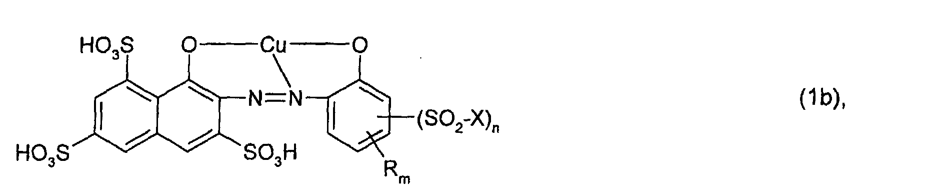 wherein
X is hydroxy, unsubstituted or hydroxy-substituted C₁-C₄alkyl or a radical -CH₂-CH₂-Z, wherein Z is C₁-C₂₄alkoxy unsubstituted or substituted in the alkyl moiety, which may further be interrupted in the alkyl moiety by oxygen; phenoxy unsubstituted or substituted in the phenyl ring; C₁-C₄alkylthio unsubstituted or substituted in the alkyl moiety; phenylthio unsubstituted or substituted in the phenyl ring; amino; N-mono- or N,N-di-C₁-C₂₄alkylamino unsubstituted or substituted in the alkyl moiety, which may further be interrupted in the alkyl moiety by oxygen or by a radical -NR₁- in which R₁ is hydrogen or unsubstituted or further substituted C₁-C₄alkyl; C₁₀-C₂₀terpeneamino; C₅-C₇cycloalkylamino unsubstituted or substituted in the cycloalkyl ring; phenyl- or naphthyl-amino or N-C₁-C₄alkyl-N-phenyl- or N-C₁-C₄alkyl-N-naphthyl-amino unsubstituted or substituted in the aryl moiety; morpholino; piperidin-1-yl; or piperazin-1-yl unsubstituted or substituted at the nitrogen atom; or X has the same definitions as Z;
R is C₁-C₄alkyl, C₁-C₄alkoxy or halogen; and
m and n are each independently of the other the number 0, 1 or 2.

12. A process for the preparation of a dye according to either claim 10 or claim 11, in which process a compound of formula (3) 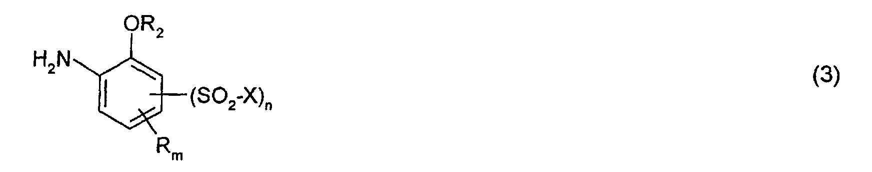 is diazotised, the resulting diazo compound is coupled to the compound of formula (4) 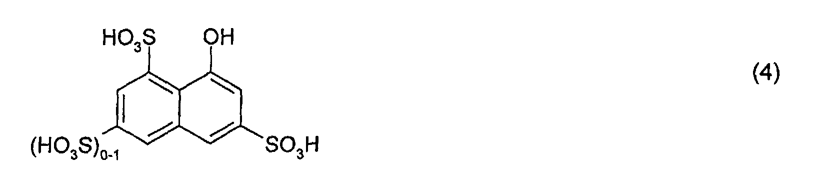 and the resulting azo dye is copper-treated with copper-yielding agents, R₂ being hydrogen or C₁-C₄alkyl, and in respect of R, X, m and n the definitions indicated in claim 10 or 11 applying; or
a compound of formula (3) wherein X is vinyl or -CH₂-CH₂-Z and Z is a group removable under alkaline conditions is diazotised, the resulting diazo compound is coupled to the compound of formula (4), the resulting azo dye is copper-treated with copper-yielding agents and the resulting copper complex azo dye is reacted as appropriate with at least an equimolar amount of a compound of formula (5)
Z-H (5),
Z being as defined in claim 11.

13. Use of a dye according to either claim 10 or claim 11 or a dye obtained according to claim 12 in the dyeing or printing of textile fibre materials, wood, paper, aluminium sheets or aluminium foils.

14. A dye mixture comprising
a dye of formula (1) 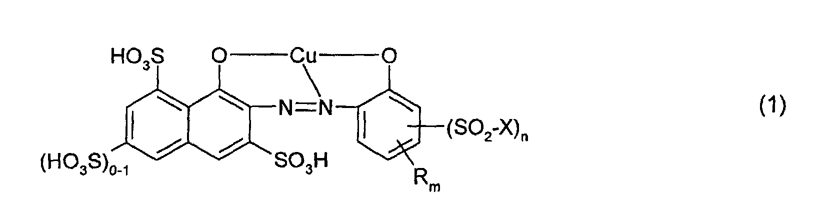 wherein
X is hydroxy, unsubstituted or hydroxy-substituted C₁-C₄alkyl, vinyl or a radical -CH₂-CH₂-Z, wherein Z is a group removable under alkaline conditions or is C₁-C₂₄alkoxy unsubstituted or substituted in the alkyl moiety, which may further be interrupted in the alkyl moiety by oxygen; phenoxy unsubstituted or substituted in the phenyl ring; C₁-C₄alkylthio unsubstituted or substituted in the alkyl moiety; phenylthio unsubstituted or substituted in the phenyl ring; amino; N-mono- or N,N-di-C₁-C₂₄alkylamino unsubstituted or substituted in the alkyl moiety, which may further be interrupted in the alkyl moiety by oxygen or by a radical -NR₁- in which R₁ is hydrogen or unsubstituted or further substituted C₁-C₄alkyl; C₁₀-C₂₀terpeneamino; C₅-C₇cycloalkylamino unsubstituted or substituted in the cycloalkyl ring; phenyl- or naphthylamino or N-C₁-C₄alkyl-N-phenyl- or N-C₁-C₄alkyl-N-naphthyl-amino unsubstituted or substituted in the aryl moiety; morpholino; piperidin-1-yl; or piperazin-1-yl unsubstituted or substituted at the nitrogen atom; or X has the same definitions as Z with the exception of a group removable under alkaline conditions;
R is C₁-C₄alkyl, C₁-C₄alkoxy or halogen; and
m and n are each independently of the other the number 0, 1 or 2;
together with at least one dye from the group:
xanthene dyes of formula (6) 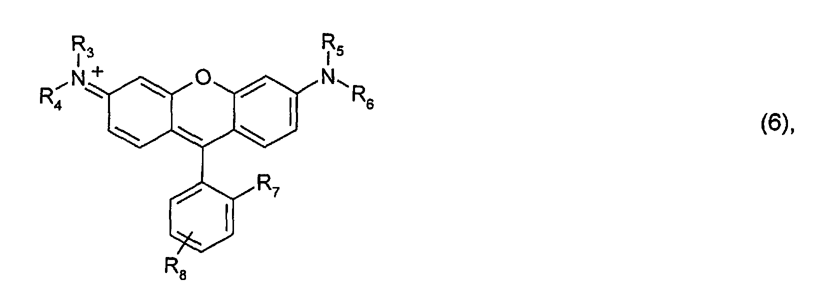
azo dyes of formula (7) 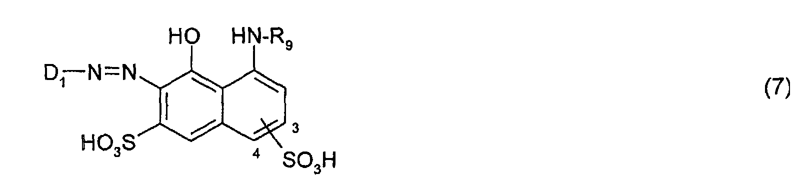 and
azo dyes of formula (8) 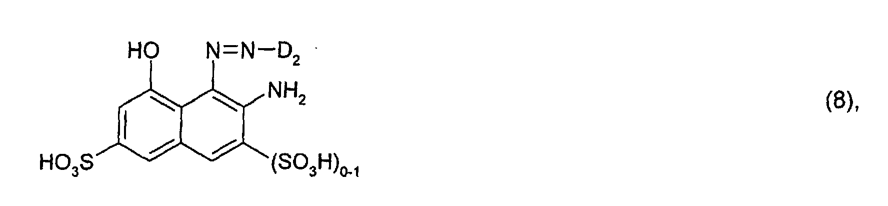
wherein
D₁ and D₂ are each independently of the other the radical of a diazo component of the benzene or naphthalene series,
R₃, R₄, R₅ and R₆ are each independently of the others C₁-C₄alkyl or unsubstituted or substituted C₅-CycycloalkyI,
R₇ and R₈ are each independently of the other sulfo or carboxy, and
R₉ is hydrogen or an acyl radical.

15. A dye of formula (1) 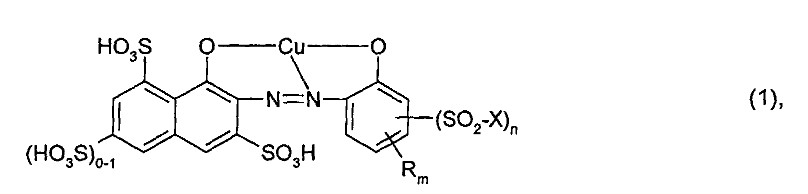 wherein
X is hydroxy, unsubstituted or hydroxy-substituted C₁-C₄alkyl, vinyl or a radical -CH₂-CH₂-Z, wherein Z is a group removable under alkaline conditions or is C₁-C₂₄alkoxy unsubstituted or substituted in the alkyl moiety, which may further be interrupted in the alkyl moiety by oxygen; phenoxy unsubstituted or substituted in the phenyl ring; C₁-C₄alkylthio unsubstituted or substituted in the alkyl moiety; phenylthio unsubstituted or substituted in the phenyl ring; amino; N-mono- or N,N-di-C₁-C₂₄alkylamino unsubstituted or substituted in the alkyl moiety, which may further be interrupted in the alkyl moiety by oxygen or by a radical -NR₁- in which R₁ is hydrogen or unsubstituted or further substituted C₁-C₄alkyl; C₁₀-C₂₀terpeneamino; C₅-C₇cycloalkylamino unsubstituted or substituted in the cycloalkyl ring; phenyl- or naphthylamino or N-C₁-C₄alkyl-N-phenyl- or N-C₁-C₄alkyl-N-naphthyl-amino unsubstituted or substituted in the aryl moiety; morpholino; piperidin-1-yl; or piperazin-1-yl unsubstituted or substituted at the nitrogen atom;
or X has the same definitions as Z with the exception of a group removable under alkaline conditions;
R is C₁-C₄alkyl, C₁-C₄alkoxy or halogen; and
m and n are each independently of the other the number 0, 1 or 2;
in the form of a salt of an amine of formula 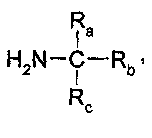 wherein the sum of the carbon atoms Rₐ + R_{b} + R_{c} is from 11 to 14.

## Revendications

1. Encres contenant
un colorant de formule (1) 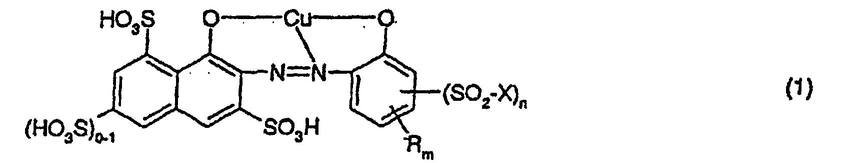 où
X représente un groupe hydroxy ; un groupe alkyle en C₁-C₄ éventuellement substitué par un substituant hydroxy ; un groupe vinyle ou un reste -CH₂-CH₂-Z, où Z représente un groupe éliminable en milieu alcalin ou un groupe alkoxy en C₁-C₂₄ éventuellement, dans le fragment alkyle, substitué et/ou interrompu par un atome d'oxygène, un groupe phénoxy éventuellement substitué dans le cycle phényle, un groupe (alkyl en C₁-C₄)thio éventuellement substitué dans le fragment alkyle, un groupe phénylthio éventuellement substitué dans le cycle phényle, un groupe amino, un groupe N-mono- ou N,N-di-(alkyl en C₁-C₂₄)-amino éventuellement, dans le fragment alkyle, substitué et/ou interrompu par un atome d'oxygène ou un reste -NR₁-, où R₁ représente un atome d'hydrogène ou un groupe alkyle en C₁-C₄ éventuellement substitué davantage, un groupe terpénamino en C₁₀-C₂₀, un groupe cyclo(alkyl en C₅-C₇) amino éventuellement substitué dans le cycle cycloalkyle, un groupe phényl- ou naphtylamino ou N-(alkyl en C₁-C₄)-N-phényl- ou N-(alkyl en C₁-C₄)-N-naphtylamino éventuellement substitués dans le fragment aryle, un groupe morpholino, un groupe pipérazin-1-yle ou pipéridin-1-yle éventuellement substitué sur l'atome d'azote ; ou X possède la signification de Z à l'exception d'un groupe éliminable en milieu alcalin ;
R représente un groupe alkyle en C₁-C₄, alkoxy en C₁-C₄ ou halogène ; et
m et n valent, indépendamment l'un de l'autre, 0, 1 ou 2 ; et
un solvant organique.

2. Encres selon la revendication 1,
**caractérisées en ce que**
R représente un groupe alkyle en C₁-C₄ ou halogène.

3. Encres selon l'une des revendications 1 et 2, **caractérisées en ce que**
Z représente des groupes -OSO₃H, -Cl, alkoxy en C₁-C₁₂ éventuellement, dans le fragment alkyle, substitué par des substituants hydroxy, sulfo ou carboxy et/ou interrompu par un, deux ou trois atomes d'oxygène, un groupe (alkyl en C₁-C₄)thio éventuellement substitué dans le fragment alkyle par des substituants hydroxy, sulfo ou carboxy, un groupe amino, un groupe N-mono- ou N,N-di-(alkyl en C₁-C₁₄)-amino éventuellement, dans le fragment alkyle, substitué par des substituants amino, (alcanoyl en C₂-C₄)amino, hydroxy, sulfo, sulfato, carboxy, carbamoyle, sulfamoyle ou phényle, qui peut être substitué de son côté par des substituants carboxy, carbamoyle, sulfo ou sulfamoyle, et/ou interrompu par un, deux ou trois atomes d'oxygène ou groupes -NR₁-, où R₁ représente un atome d'hydrogène ou un groupe alkyle en C₁-C₄ éventuellement substitué par un substituant amino, un groupe diterpénamino en C₂₀, un groupe cyclo(alkyl en C₅-C₇)amino éventuellement substitué par un substituant alkyle en C₁-C₄ ou carboxyle, un groupe phénylamino ou N-(alkyl en C₁-C₄)-N-phénylamino éventuellement substitué par des substituants carboxyméthyle, alkoxy en C₁-C₄, carboxy, carbamoyle, sulfo, halogène ou N-(alkyl en C₁-C₄)-carbamoyle, qui peut être de son côté substitué davantage dans le fragment alkyle par un substituant carboxy, un groupe naphtylamino substitué dans le fragment aryle par un substituant sulfo, un groupe morpholino, un groupe pipérazin-1-yle ou pipéridin-1-yle éventuellement substitué sur l'atome d'azote par un substituant 2-aminoéthyle ou 3-aminopropyle.

4. Encres selon l'une des revendications 1 à 3, **caractérisées en ce que**
Z représente un groupe -OSO₃H, un groupe (alkyl en C₁-C₄)thio éventuellement substitué dans le fragment alkyle par des substituants hydroxy, sulfo ou carboxy, un groupe amino, un groupe N-mono- ou N,N-di-(alkyl en C₁-C₁₄)-amino éventuellement, dans le fragment alkyle, substitué par un substituant amino, (alcanoyl en C₂-C₄)-amino, hydroxy, sulfo, sulfato, carboxy, carbamoyle, sulfamoyle ou phényle qui de son côté peut être substitué par des substituants carboxy, carbamoyle, sulfo ou sulfamoyle, et/ou interrompu par un, deux ou trois atomes d'oxygène ou groupes -NH-, un groupe diterpénamino en C₂₀, un groupe phénylamino ou N-(alkyl en C₁-C₄)-N-phénylamino éventuellement substitué par des substituants carboxyméthyle, alkoxy en C₁-C₄, carboxy, carbamoyle, sulfo, halogène ou N-(alkyl en C₁-C₄)-carbamoyle qui peut être de son côté substitué davantage dans le fragment alkyle par un substituant carboxy, un groupe naphtylamino substitué dans le fragment aryle par un substituant sulfo, un groupe morpholino, un groupe pipérazin-1-yle ou pipéridin-1-yle éventuellement substitué sur l'atome d'azote par un substituant 2-aminoéthyle.

5. Encres selon l'une des revendications 1 à 4, **caractérisées en ce que**
Z représente un groupe -OSO₃H, un groupe (alkyl en C₁-C₄)thio éventuellement substitué dans le fragment alkyle par des substituants hydroxy, sulfo ou carboxy, un groupe amino, un groupe N-mono-(alkyl en C₁-C₆)-amino éventuellement, dans le fragment alkyle, substitué par un substituant amino, hydroxy, sulfo, sulfato, carboxy, carbamoyle ou phényle qui de son côté peut être substitué par un substituant carboxy, et/ou interrompu par un ou deux atomes d'oxygène ou groupes -NH-, un groupe N,N-di(alkyl en C₁-C₆)-amino éventuellement substitué dans le fragment alkyle par des substituants amino, hydroxy, sulfo, sulfato, carboxy ou carbamoyle, un groupe morpholino ou un groupe pipérazin-1-yle éventuellement substitué sur l'atome d'azote par un substituant 2-aminoéthyle.

6. Encres selon l'une des revendications 1 à 5, **caractérisées en ce que**
X représente un groupe hydroxy ; un reste -CH₂-CH₂-Z où Z représente un groupe -OSO₃H, un groupe (alkyl en C₁-C₄)thio éventuellement substitué dans le fragment alkyle par des substituants hydroxy, sulfo ou carboxy, un groupe amino, un groupe N-mono-(alkyl en C₁-C₆)-amino éventuellement, dans le fragment alkyle, substitué par un substituant amino, hydroxy, sulfo, sulfato, carboxy, carbamoyle ou phényle qui peut être de son côté substitué par un substituant carboxy, et/ou interrompu par un ou deux atomes d'oxygène ou groupes -NH-, un groupe N,N-di-(alkyl en C₁-C₆)-amino éventuellement substitué dans le fragment alkyle par un substituant amino, hydroxy, sulfo, sulfato, carboxy ou carbamoyle, un groupe morpholino ou un groupe pipérazin-1-yle éventuellement substitué sur l'atome d'azote par un substituant 2-aminoéthyle ; ou
X représente un groupe amino, un groupe N-mono-(alkyl en C₁-C₄)-amino éventuellement substitué dans le fragment alkyle par un substituant hydroxy, sulfo, sulfato, carboxy ou phényle qui peut être substitué de son côté par un substituant carboxy, un groupe N,N-di-(alkyl en C₁-C₄)-amino éventuellement substitué dans le fragment alkyle par des substituants hydroxy, sulfo ou carboxy, un groupe morpholino ou un groupe pipérazin-1-yle éventuellement substitué sur l'atome d'azote par un substituant 2-aminoéthyle.

7. Encres selon l'une des revendications 1 à 6, caractérisées en que
m vaut 0 ou 1 et
n vaut 1 ou 2.

8. Encres selon l'une des revendications 1 à 7, **caractérisées en ce que** le colorant de formule (1) est un colorant de formule (2)

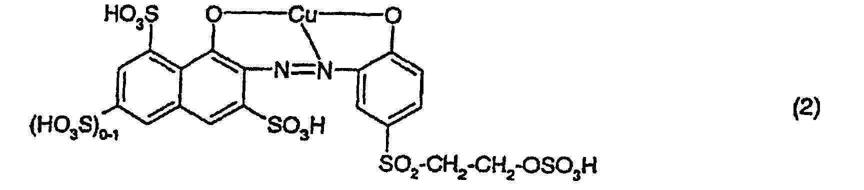

9. Procédé pour l'impression de papier, de matières fibreuses textiles, de feuilles plastiques ou d'aluminium selon le procédé par jet d'encre, **caractérisé en ce qu'**on utilise une encre selon la revendication 1.

10. Colorants de formule (1a) 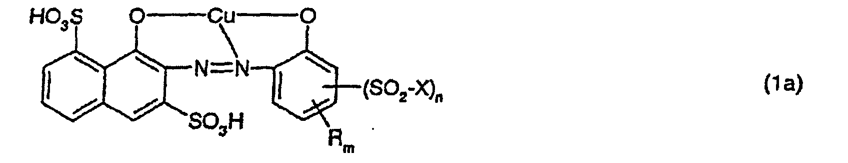 où
X représente un groupe hydroxy ; un groupe alkyle en C₁-C₄ éventuellement substitué par un substituant hydroxy ; un groupe vinyle ou un reste -CH₂-CH₂-Z, où Z représente un groupe éliminable en milieu alcalin ou un groupe alkoxy en C₁-C₂₄ éventuellement, dans le fragment alkyle, substitué et/ou interrompu par un atome d'oxygène, un groupe phénoxy éventuellement substitué dans le cycle phényle, un groupe (alkyl en C₁-C₄)thio éventuellement substitué dans le fragment alkyle, un groupe phénylthio éventuellement substitué dans le cycle phényle, un groupe amino, un groupe N-mono- ou N,N-di-(alkyl en C₁-C₂₄)-amino éventuellement substitué et/ou interrompu dans le fragment alkyle par un atome d'oxygène ou un reste -NR₁-, où R₁ représente un atome d'hydrogène ou un groupe alkyle en C₁-C₄ éventuellement substitué davantage, un groupe terpénamino en C₁₀-C₂₀, un groupe cyclo(alkyl en C₅-C₇)amino éventuellement substitué dans le cycle cycloalkyle, des groupes phényl- ou naphtylamino ou N-(alkyl en C₁-C₄)-N-phényl- ou N-(alkyl en C₁-C₄)-N-naphtylamino éventuellement substitué dans le fragment aryle, un groupe morpholino, un groupe pipérazin-1-yle ou pipéridin-1-yle éventuellement substitué sur l'atome d'azote ; ou X possède la signification de Z à l'exception d'un groupe éliminable en milieu alcalin ;
R représente un groupe alkyle en C₁-C₄, alkoxy en C₁-C₄ ou halogène ; et
m et n valent indépendamment l'un de l'autre 0, 1 ou 2.

11. Colorants de formule (1b) 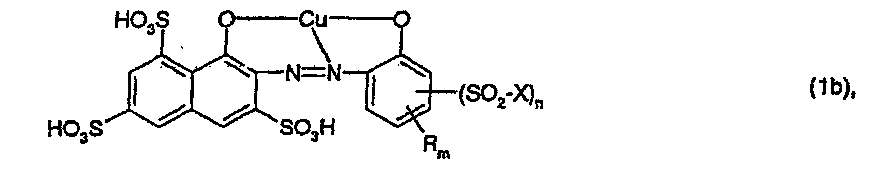 où
X représente un groupe hydroxy ; un groupe alkyle en C₁-C₄ éventuellement substitué par un substituant hydroxy ; ou un reste -CH₂-CH₂-Z, où Z représente un groupe alkoxy en C₁-C₂₄ éventuellement substitué et/ou interrompu dans le fragment alkyle par un atome d'oxygène, un groupe phénoxy éventuellement substitué dans le cycle phényle, un groupe (alkyl en C₁-C₄)thio éventuellement substitué dans le fragment alkyle, un groupe phénylthio éventuellement substitué dans le cycle phényle, un groupe amino, un groupe N-mono- ou N,N-di-(alkyl en C₁-C₂₄)-amino éventuellement substitué et/ou interrompu dans le fragment alkyle par un atome d'oxygène ou un reste -NR₁-, où R₁ représente un atome d'hydrogène ou un groupe alkyle en C₁-C₄ éventuellement substitué davantage, un groupe terpénamino en C₁₀-C₂₀, un groupe cyclo(alkyl en C₅-C₇)amino éventuellement substitué dans le cycle cycloalkyle, un groupe phényl- ou naphtylamino ou N-(alkyl en C₁-C₄)-N-phényl- ou N-(alkyl en C₁-C₄)-N-naphtylamino éventuellement substitué dans le fragment aryle, un groupe morpholino, un groupe pipérazin-1-yle ou pipéridin-1-yle éventuellement substitué sur l'atome d'azote ; ou X possède la signification de Z ;
R représente un groupe alkyle en C₁-C₄, alkoxy en C₁-C₄ ou halogène ; et
m et n valent indépendamment l'un de l'autre 0, 1 ou 2.

12. Procédé pour la préparation de colorants selon l'une des revendications 10 et 11, **caractérisé en ce qu'**on diazote un composé de formule (3) 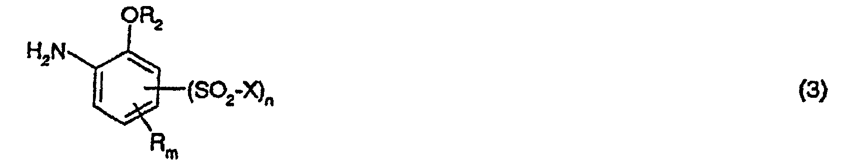 on copule le composé diazoïque obtenu sur le composé de formule (4) 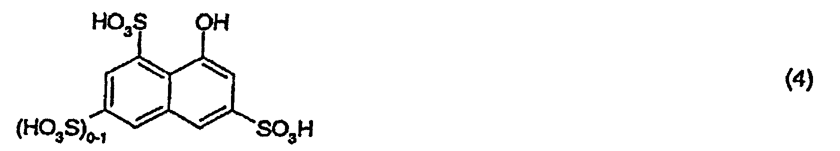 et on réalise un cuivrage du colorant azoïque formé à l'aide d'agents donneurs de cuivre, où R₂ représente un atome d'hydrogène ou un groupe alkyle en C₁-C₄, et R, X, m et n possèdent chacun les significations données à la revendication 10 ou 11 ; ou
on diazote un composé de formule (3), où X représente un groupe vinyle ou -CH₂-CH₂-Z et Z représente un groupe éliminable en milieu alcalin, on copule le composé diazoïque obtenu sur le composé de formule (4), on réalise le cuivrage du colorant azoïque formé à l'aide d'agents donneurs de cuivre et éventuellement on fait réagir le colorant azoïque à complexe de cuivre obtenu sur une quantité au moins équimolaire d'un composé de formule (5)
Z-H (5)
où Z possède les significations données à la revendication 11.

13. Utilisation de colorants selon l'une des revendications 10 et 11, ou obtenus selon la revendication 12, pour la teinture ou l'impression de matières fibreuses textile, de bois, de papier, de tôles d'aluminium ou de feuilles d'aluminium.

14. Mélanges de colorants contenant
un colorant de formule (1) 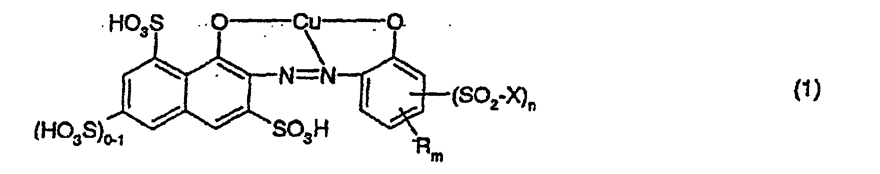 où
X représente un groupe hydroxy ; un groupe alkyle en C₁-C₄ éventuellement substitué par un substituant hydroxy ; un groupe vinyle ou un reste -CH₂-CH₂-Z, où Z représente un groupe éliminable en milieu alcalin ou un groupe alkoxy en C₁-C₂₄ éventuellement, dans le fragment alkyle, substitué et/ou interrompu par un atome d'oxygène, un groupe phénoxy éventuellement substitué dans le cycle phényle, un groupe (alkyl en C₁-C₄)thio éventuellement substitué dans le fragment alkyle, un groupe phénylthio éventuellement substitué dans le cycle phényle, un groupe amino, un groupe N-mono- ou N,N-di-(alkyl en C₁-C₂₄)-amino éventuellement, dans le fragment alkyle, substitué et/ou interrompu par un atome d'oxygène ou un reste -NR₁-, où R₁ représente un atome d'hydrogène ou un groupe alkyle en C₁-C₄ éventuellement substitué davantage, un groupe terpénamino en C₁₀-C₂₀, un groupe cyclo(alkyl en C₅-C₇)amino éventuellement substitué dans le cycle cycloalkyle, un groupe phényl- ou naphtylamino ou N-(alkyl en C₁-C₄)-N-phényl- ou N-(alkyl en C₁-C₄)-N-naphtylamino éventuellement substitué dans le fragment aryle, un groupe morpholino, un groupe pipérazin-1-yle ou pipéridin-1-yle éventuellement substitué sur l'atome d'azote ; ou X possède la signification de Z à l'exception d'un groupe éliminable en milieu alcalin ;
R représente un groupe alkyle en C₁-C₄, alkoxy en C₁-C₂₄ ou halogène ; et
m et n valent, indépendamment l'un de l'autre, 0, 1 ou 2 ;
conjointement avec au moins un colorant pris dans le groupe des
colorants xanthéniques de formule (6) 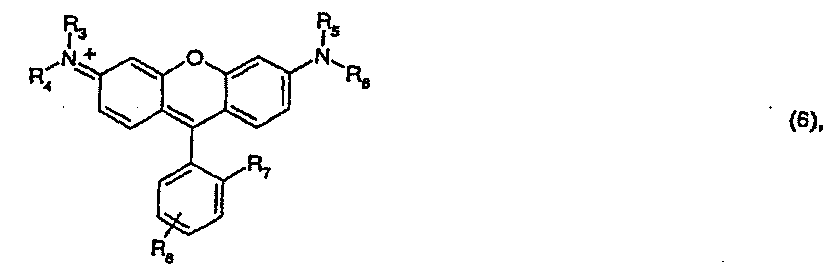 des colorants azoïques de formules (7) 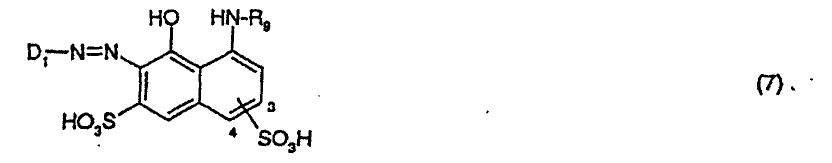 et
des colorants azoïques de formule (8) 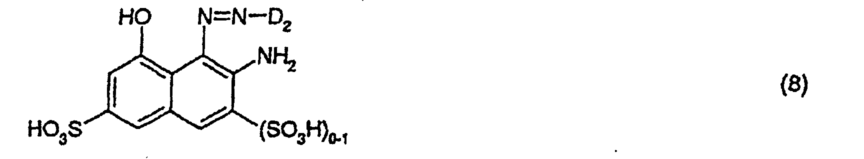 où
D₁ et D₂ représentent, indépendamment l'un de l'autre, le reste d'un composant diazoïque de la série du benzène ou du naphtalène,
R₃, R₄, R₅ et R₆ représentent, indépendamment l'un de l'autre, des groupes alkyle en C₁-C₄ ou cycloalkyle en C₅-C₇ éventuellement substitué,
R₇ et R₈ représentent, indépendamment l'un de l'autre, des groupes sulfo ou carboxy, et
R₉ représente un atome d'hydrogène ou un reste acyle.

15. Colorants de formule (1) 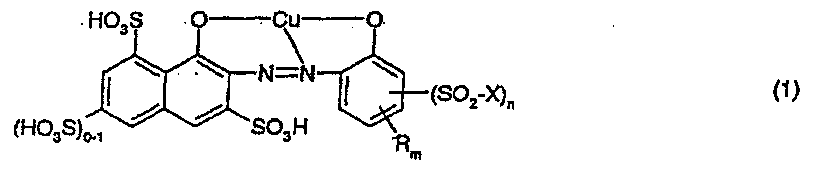 où
X représente un groupe hydroxy ; un groupe alkyle en C₁-C₄ éventuellement substitué par un substituant hydroxy ; un groupe vinyle ou un reste -CH₂-CH₂-Z, où Z représente un groupe éliminable en milieu alcalin ou un groupe alkoxy en C₁-C₂₄ éventuellement, dans le fragment alkyle, substitué et/ou interrompu par un atome d'oxygène, un groupe phénoxy éventuellement substitué dans le cycle phényle, un groupe (alkyl en C₁-C₄)thio éventuellement substitué dans le fragment alkyle, un groupe phénylthio éventuellement substitué dans le cycle phényle, un groupe amino, un groupe N-mono- ou N,N-di-(alkyl en C₁-C₂₄)-amino éventuellement, dans le fragment alkyle, substitué et/ou interrompu par un atome d'oxygène ou un reste -NR₁-, où R₁ représente un atome d'hydrogène ou un groupe alkyle en C₁-C₄ éventuellement substitué davantage, un groupe terpénamino en C₁₀-C₂₀, un groupe cyclo(alkyl en C₅-C₇)amino éventuellement substitué dans le cycle cycloalkyle, un groupe phényl- ou naphtylamino ou N-(alkyl en C₁-C₄)-N-phényl- ou N-(alkyl en C₁-C₄)-N-naphtylamino éventuellement substitué dans le fragment aryle, un groupe morpholino, un groupe pipérazin-1-yle ou pipéridin-1-yle éventuellement substitué sur l'atome d'azote ; ou X possède la signification de Z à l'exception d'un groupe éliminable en milieu alcalin ;
R représente un groupe alkyle en C₁-C₄, alkoxy en C₁-C₂₄ ou halogène ; et
m et n valent, indépendamment l'un de l'autre, 0, 1 ou 2 ;
en tant que sel d'une amine de formule 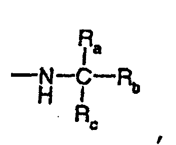 la somme des atomes de carbone Rₐ + R_{b} + R_{c} étant de 11 à 14.
